(19) Europäisches Patentamt / European Patent Office / Office européen des brevets

(11) **EP 2 583 424 B1**

## (12) EUROPEAN PATENT SPECIFICATION

(45) Date of publication and mention
of the grant of the patent:
**12.11.2014 Bulletin 2014/46**

(21) Application number: **11838996.4**

(22) Date of filing: **19.08.2011**

(51) Int Cl.:
*H04L 27/22* (2006.01)  *H04B 7/26* (2006.01)
*H04L 27/227* (2006.01)  *H04L 27/26* (2006.01)
*H04W 56/00* (2009.01)  *H04L 27/00* (2006.01)

(86) International application number:
**PCT/CN2011/078640**

(87) International publication number:
**WO 2012/119402 (13.09.2012 Gazette 2012/37)**

(54) **METHOD FOR PHASE AND OSCILLATOR FREQUENCY ESTIMATION**

VERFAHREN ZUR MESSUNG EINER PHASEN- UND OSZILLATORFREQUENZ

PROCÉDÉ D'ESTIMATION DE PHASE ET DE FRÉQUENCE D'OSCILLATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.04.2013 Bulletin 2013/17**

(73) Proprietor: **Huawei Technologies Co., Ltd.
Shenzhen, Guangdong 518129 (CN)**

(72) Inventors:
 • **Hauske, Fabian Nikolaus
80992 Munich (DE)**

 • **Qi, Juan
80992 Munich (DE)**

(74) Representative: **Kreuz, Georg Maria
Huawei Technologies Duesseldorf GmbH
Messerschmittstrasse 4
80992 München (DE)**

(56) References cited:
**EP-A1- 0 703 688     CN-A- 101 800 604
US-A1- 2009 131 006     US-A1- 2011 116 562**

**Description**

BACKGROUND OF THE INVENTION

The present invention relates to a method for estimating a phase of a phase modulated signal, to a method for estimating a Local Oscillator Frequency Offset signal for a phase modulated signal and to a receiver for processing a received phase modulated signal, the receiver having a phase estimator and an oscillator frequency estimator.

In coherent optical transmission systems, local oscillator frequency and phase offset brings severe degradation to system. The intradyne, i.e. phase diversity coherent receiver requires digital estimation and compensation of the carrier phase offset and the carrier frequency offset between the data sequence and the local oscillator.

Typically, an estimation of the LOFO (Local Oscillator Frequency Offset) is performed by the differential Viterbi&Viterbi (V&V) algorithm in the carrier recovery stage, where the carrier phase increment is estimated by use of an averaging filter, an $M^{th}$-power computation, an angle calculation and a phase-ramp detection. Similarly, the carrier phase can be estimated by the V&V algorithm employing different parameters for averaging.

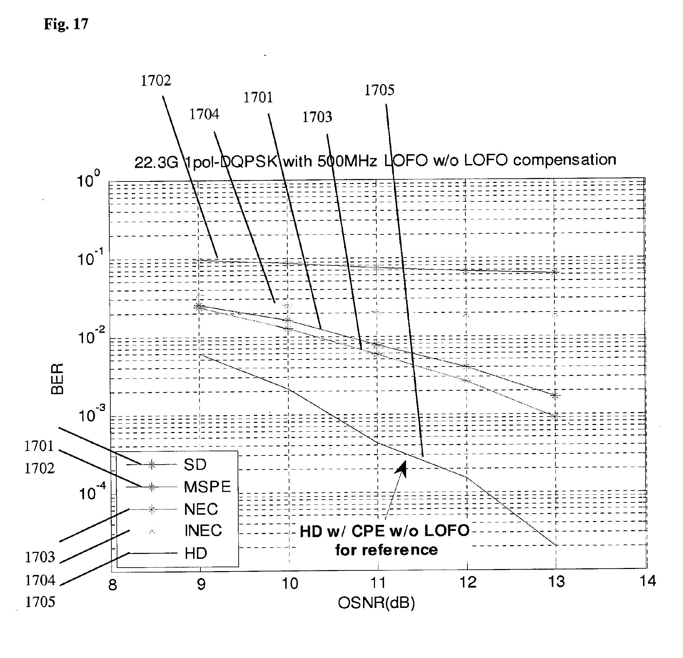

The carrier phase recovery is largely improved if the LOFO is close to zero, which requires a previous LOFO estimation stage and either control of the Local Oscillator (LO) in the optical front-end or digital LOFO compensation. If the LOFO is not compensated, severe performance degradation can occur as depicted in Fig. 17 illustrating a degradation of a 40G DQPSK transmission due to Local Oscillator Frequency Offset. The figure shows bit error rate (BER) degradation from Local Oscillator Frequency Offset (LOFO) for a 40G DQPSK simulation system with various soft differential (SD) schemes. Note, in this case no phase recovery is required. For the example of 500 MHz LOFO and also for other exemplary values of LOFO which are not depicted in this figure, all performances degrade compared to the reference curve 1705, which is hard differential decoding without LOFO for reference. This demonstrates that any scheme employing differential demodulation instead of a dedicated carrier phase recovery suffers from large LOFO, which should be compensated prior to this stage. The following schemes are listed: Standard soft differential (SD) demodulation 1701, MSPE (multi-symbol phase estimation) 1702, non-redundant error detection (NEC) 1703 and improved NEC (INEC) 1704.

Thus, all digital coherent receivers require local oscillator frequency offset compensation. Thereafter, some systems even might require carrier phase offset compensation. In both cases, carrier phase estimation is required. In the first case, only the increment of the phase (=frequency) needs to be estimated, in the second case, the phase itself needs to be estimated. The received signal after equalization can be described by the superposition of a random data pattern mapped to the constellation points to the basic transmission pulse impaired by a phase distortion. To estimate a phase distortion, the modulation consisting of whole-number multiples of $\pi/2$ shall to be removed. This can be performed by the $M^{th}$-power operation according to the V&V algorithm. The V&V algorithm, however, is complex in the implementation with the $4^{th}$-power operation, i.e., two complex multiplications, the averaging by using several additions and the angle computation by using a lookup table.

EP 0 703 688 A1 relates to a phase detector for carrier recovery control for the purpose of demodulating a QPSK-modulated signal. The phase detector derives a digital control signal for controlling an oscillator from a digital in-phase signal and a digital quadrature phase signal.

US 2011/0116562 A1 relates to a digital communications receiver and a method of estimating residual carrier frequency offset in a received signal.

SUMMARY OF THE INVENTION

It is the object of the invention to provide a concept for a low complexity carrier phase estimation together with a low complexity Local Oscillator Frequency Offset estimation.

This object is achieved by the features of the independent claims. Further implementation forms are apparent from the dependent claims, the description and the figures.

The invention is based on the finding that for calculating a phase reference from a modulated signal, a computational efficient implementation which requires no multiplications, only logic additions and real number additions, is feasible with only insignificant performance degradation. A further finding is that an estimation of the Local Oscillator Frequency Offset which appears as a phase ramp by a gradient detection method is highly sensitive against distortions and noise wherein an estimation in frequency domain shows a much higher robustness against distortions and noise. Also the typical $2\pi$ phase ambivalence requires unwrapping before the phase ramp gradient can be detected, which is prone to errors in presence of distortions and noise.

In order to describe the invention in detail, the following terms, abbreviations and notations will be used:

| | |
|---|---|
| PDM: | Polarization Division Multiplexing |
| (D)QPSK: | (Differential) Quaternary Phase Shift Keying, (Differential) Quadrature Phase Shift Keying |
| CD: | Chromatic Dispersion |

| PMD: | Polarisation Mode Dispersion |
|---|---|
| PLL: | Phase Locked Loop |
| FD: | Frequency Domain |
| TD: | Time Domain |
| FFT: | Fast Fourier Transform |
| IFFT: | Inverse Fast Fourier Transform |
| DFT: | Discrete Fourier Transform |
| DSP: | Digital Signal Processing |
| ADC: | Analog/Digital converter |
| FIR: | Finite Impulse Response |
| LO: | Local Oscillator |
| FO: | Frequency Offset |
| TR: | Timing Recovery |
| PMD: | Polarization-Mode Dispersion |
| sps: | Samples per Symbol |
| FFW: | Feed Forward |
| FB: | Feed Back |
| SOP: | State of Polarization |
| PDL: | Polarization-dependent Loss |
| DGD: | Differential Group Delay |
| FEC: | Forward Error Correction |
| BER: | Bit-Error Rate |
| CPE: | Carrier-phase estimation |
| I: | Inphase |
| Q: | Quadrature |
| MIMO: | Multi input multi output |
| OSNR: | Optical Signal-to-Noise Ratio |
| WDM: | Wavelength Division Multiplex |
| DWDM: | Dense Wavelength Division Multiplex |
| SD: | Soft Differential |
| HD: | Hard Differential |
| NEC: | Non-redundant Error Correction |
| V&V: | Viterbi&Viterbi |
| MSPE: | multi-symbol phase estimation |
| INEC: | improved non-redundant error correction |
| POLMUX-QPSK: | polarization-multiplexed quadrature phase shift keying |

According to a first aspect, the invention relates to a method for estimating a phase of a phase modulated signal having an inphase component and a quadrature component, the method comprising: determining the inphase component of the phase modulated signal; determining the quadrature component of the phase modulated signal; determining a difference of absolute values of the inphase component and the quadrature component to obtain a difference component; determining a sign of the inphase component to obtain an inphase sign; determining a sign of the quadrature component to obtain a quadrature sign; and adjusting a sign of the difference component upon the basis of the inphase sign and the quadrature sign to obtain the phase estimate.

Calculating the phase reference which corresponds to the phase estimate from the signal is feasible without $M^{th}$-power computation and without angle calculation. Therefore, no multiplication operations are required, only logic addition and real number additions have to be performed. The determining the difference component requires only real number additions and the adjusting the sign of of the difference component upon the basis of the inphase sign and the quadrature sign requires only logic additions.

In a first possible implementation form of the method according to the first aspect, the method further comprises: averaging the phase estimate for determining an average of the phase.

By averaging the phase estimate, the average of the phase has a higher precision than the non-averaged phase estimate.

In a second possible implementation form of the method according to the first aspect as such or according to the first implementation form of the first aspect, the adjusting the sign comprises weighting the difference component with a sign presenting a sign multiplication of the inphase sign and the quadrature sign.

The weighting of the difference component is highly computational efficient, as a sign multiplication can be performed by logic additions according to a modulo-2 operation.

In a third possible implementation form of the method according to the first aspect as such or according to the any of the preceding implementation forms of the first aspect, the sign of the difference component is determined by a modulo-2 addition of the inphase sign and the quadrature sign.

The modulo-2 addition can be easily implemented in hardware by an EXOR gate. An EXOR gate is a standard circuit which is efficient in computation and in die size when implemented on a chip.

In a fourth possible implementation form of the method according to the first aspect as such or according to any of the preceding implementation forms of the first aspect, the estimating the phase comprises only logic addition and real number addition operations.

When using only logic addition and real number addition operations, the computational complexity is highly reduced compared to standard solutions which require $M^{th}$-power and angle computations, i.e. table lookup.

In a fifth possible implementation form of the method according to the first aspect as such or according to any of the preceding implementation forms of the first aspect, the method further comprises: compensating a carrier phase offset between the phase modulated signal and a local oscillator signal by using the phase estimate.

In coherent optical transmission systems, local oscillator frequency and phase offset brings severe degradation to system. The intradyne, i.e. phase diversity coherent receiver requires digital estimation and compensation of the carrier phase offset and the carrier frequency offset between the data sequence and the local oscillator. By using the phase estimate according to the fifth possible implementation form of the method, degradation in coherent optical transmission can be significantly reduced.

In a sixth possible implementation form of the method according to the first aspect as such or according to any of the preceding implementation forms of the first aspect, the phase is a carrier phase.

Carrier phase estimation according to the sixth implementation form can be applied in the carrier recovery stage of an optical receiver and thus replace the computational complex V&V algorithm by a noise and distortion robust computational efficient algorithm.

According to a second aspect, the invention relates to a method for estimating a Local Oscillator Frequency Offset (LOFO) signal for a phase modulated signal, the method comprising: determining a phase estimate of the phase modulated signal according to the first aspect as such or according to any of the implementation forms of the first aspect; transforming the phase estimate into frequency domain to obtain a transformed phase estimate; differentiating the phase estimate with respect to time to obtain a differential phase estimate; determining a maximum of the transformed phase estimate to obtain an absolute value of the Local Oscillator Frequency Offset signal; determining an average of the differential phase estimate to obtain an averaged differential phase estimate; and determining a sign of the averaged differential phase estimate to obtain a sign of the Local Oscillator Frequency Offset signal.

A LOFO appears as a phase-ramp. The gradient of the phase ramp refers to the estimated LOFO. Due to the typical $2\pi$ phase ambivalence, the phase-ramp is represented as a saw-tooth function with discontinuous $2\pi$ phase-jumps once the phase exceeds the range of +/-pi. Before the gradient of the phase ramp can be detected, unwrapping of these discontinuities is required, which is prone to errors in presence of distortions and noise. Therefore, gradient detection is not robust enough for distortions and noise. Transferring the phase reference, i.e., phase estimate into frequency-domain, however, is sufficiently robust against distortions and noise. The maximum clock tone of the power spectrum, which refers to the first-order harmonic wave, indicates the absolute value of the estimated LOFO. The frequency transformation calculation acts as averaging filter, a larger frequency transformation size provides better robustness against distortions. The sign of the LOFO can be simply obtained by the differential phase reference which corresponds to the differential phase estimate.

In a first possible implementation form of the method according to the second aspect, the Local Oscillator Frequency Offset signal is obtained as a product of the absolute value of the Local Oscillator Frequency Offset signal, of the sign of the Local Oscillator Frequency Offset signal and of a frequency resolution $\Delta f$ of the frequency transformation.

The LOFO signal may be obtained by a sign multiplication. As the frequency resolution $\Delta f$ of the frequency transformation is a known parameter, the LOFO signal can be output as the sign product of its absolute value and its sign on a scale determined by the frequency resolution $\Delta f$. An actual multiplication by the frequency resolution $\Delta f$ is not necessary, thereby saving computational complexity.

In a second possible implementation form of the method according to the second aspect as such or according to the first implementation form of the second aspect, the transforming comprises a Fast Fourier Transformation (FFT).

The FFT is a standard algorithm. A lot of implementations exist in hardware and software which can be adapted for application for LOFO estimation. The FFT is highly computational efficient. It is sufficient to only compute the upper side-band of the FFT because of the symmetric properties of the lower side-band. The FFT calculation acts as averaging filter, a larger FFT size provides better robustness against distortions.

In a third possible implementation form of the method according to the second aspect as such or according to the any of the preceding implementation forms of the second aspect, the differentiating comprises: delaying the phase estimate by a predetermined time delay to obtain a delayed phase estimate; and determining a difference of the phase estimate and the delayed phase estimate.

Delaying by a time delay T requires a memory of size one for storing the time delayed value of the phase estimate. The difference can be calculated by an arithmetic addition. This is simple compared to a multiplication of the phase estimate with its delayed conjugate complex version and succeeding angle calculation which requires complex multiplication and table lookup operations.

In a fourth possible implementation form of the method according to the second aspect as such or according to the any of the preceding implementation forms of the second aspect, the method comprises: determining the frequency resolution Δf as a quotient of a baudrate of the digitally modulated complex-valued data signal and four times a size N of the transformation used for transforming the phase estimate into frequency domain.

As the LOFO changes only slowly, no continuous estimation is required and the computation can be performed on certain blocks. Due to the slow change of the LOFO, the resolution of the frequency domain LOFO estimation can depend on the size N of the frequency transform and on the baudrate.

In a fifth possible implementation form of the method according to the second aspect as such or according to the any of the preceding implementation forms of the second aspect, the method comprises: storing the phase estimate in a memory having a size equal or greater than the size N of the transformation used for transforming the phase estimate into frequency domain.

A memory of depth N, in particular a FIFO (First In First Out) memory, can store N values of the phase estimate. It can be used for forming an average value of the phase estimate and for the values of the phase estimate required by the frequency transform.

In a sixth possible implementation form of the method according to the second aspect as such or according to the any of the preceding implementation forms of the second aspect, the method further comprises: compensating a carrier frequency offset between the phase modulated signal and a local oscillator signal by using the Local Oscillator Frequency Offset signal.

All digital coherent receivers require local oscillator frequency offset compensation. Thus, the method according to the sixth implementation form may be implemented in any digital coherent receiver and reduces the complexity of the receiver.

The method may also be applied in demodulation by soft-differential (SD) decoding with non-redundant error correction (NEC) which also requires a previous LOFO compensation. When applied to that demodulation, the complexity of the demodulator is reduced.

In a seventh possible implementation form of the method according to the second aspect as such or according to the any of the preceding implementation forms of the second aspect, the phase modulated signal is a BPSK or a QPSK signal, in particular an optical BPSK or an optical QPSK signal.

The method is applicable to any modulation scheme using BPSK or QPSK, in particular for optical BPSK and QPSK signals. Each of the BPSK and QPSK signals may be transmitted using single polarization transmission or using POLMUX transmission. The computation is fast, robust and accurate.

The method is applicable in particular for long-haul transmission using 100-Gb/s polarization-multiplexed quadrature phase shift keying (POLMUX-QPSK) modulation, which is likely to become the next standard for long-haul optical transmission systems. POLMUX-QPSK modulation is often also referred to as CP-QPSK, PDM-QPSK, 2P-QPSK or DP-QPSK.

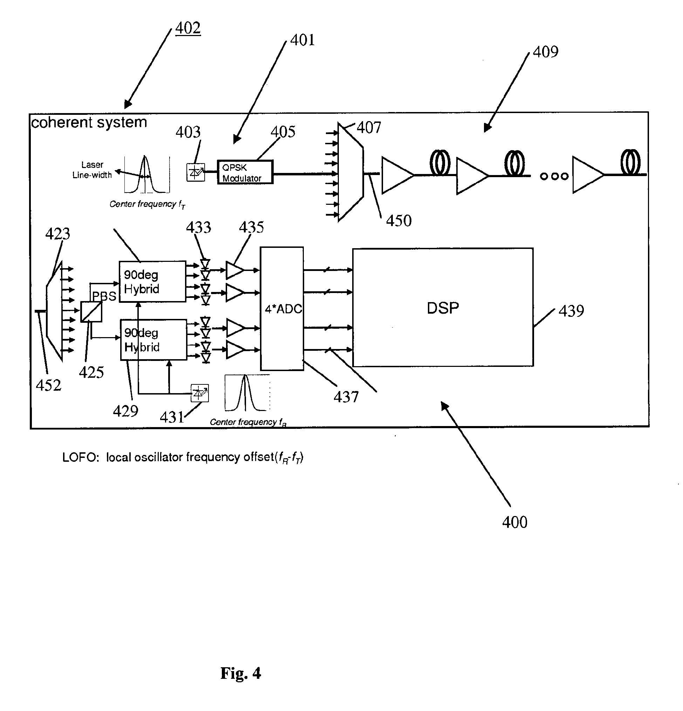

A POLMUX-QPSK transmitter consists of two quadrature (e.g. QPSK) modulators and a polarization beam splitter (PBS) to multiplex the two outputs on orthogonal polarizations. At the receiver side, as will be described below with respect to Fig. 4, the received optical signal is split in two tributaries with arbitrarily, but orthogonal, polarizations using a second PBS. Both tributaries are subsequently mixed in a 90° hybrid structure with the output of a local oscillator. The outputs of the 90° hybrids (in-phase and quadrature components of both polarizations) are then detected with 4 photodiodes (either balanced or single-ended) and converted to the digital domain using high-speed analog-to-digital converters (ADCs).

As POLMUX-QPSK modulates 4 bits per symbol, a low symbol rate of ~28 Gbaud is sufficient to obtain a 111-Gb/s line rate. This translates into a 100-Gb/s net data rate when a forward-error correction (FEC) overhead of ~7% and an Ethernet overhead of ~4% are subtracted. The lower symbol rate improves the tolerance to linear transmission impairments, which in turn allows for less stringent requirements on the electrical equalization, as well as making it possible to use lower-frequency electrical components and to use the low complexity methods as described herein.

In an eighth possible implementation form of the method according to the second aspect as such or according to the any of the preceding implementation forms of the second aspect, the method further comprises: receiving the phase modulated signal by a receiving front-end; and controlling the receiving front-end using the Local Oscillator Frequency Offset signal.

When the receiving front-end is controlled by using the LOFO signal, the Local Oscillator can be adjusted for compensating the frequency offset, thereby improving the precision of the receiving front-end.

According to a third aspect, the invention relates to a coherent receiver for processing a received phase modulated signal, the receiver comprising a phase estimator being configured to estimate of a phase of the phase modulated signal according to the method of the first aspect as such or according to the method of any of the implementation forms of the first aspect; and an oscillator frequency estimator being configured to estimate a Local Oscillator Frequency Offset signal according to the method of the second aspect as such or according to the method of any of the implementation forms of the second aspect.

The coherent receiver may be an optical coherent receiver based on a coherent detection scheme which detects not only the optical signal's amplitude but phase and polarization as well. With the optical coherent detection's increased detection capability and spectral efficiency, more data can be transmitted within the same optical bandwidth. More over, because coherent detection allows an optical signal's phase and polarization to be detected and therefore measured and processed, transmission impairments which previously presented challenges to accurate data reception, can be mitigated electronically when the received optical signal is converted into the electronic domain.

According to a fourth aspect, the invention relates to a computer program having a program code for performing one of the methods of one of the first aspect as such or according of any of the implementation forms of the first aspect or of the second aspect as such or according to any of the implementation forms of the second aspect when run on a computer.

The methods described herein may be implemented as software in a Digital Signal Processor (DSP), in a micro-controller or in any other side-processor or as hardware circuit within an application specific integrated circuit (ASIC).

The invention can be implemented in digital electronic circuitry, or in computer hardware, firmware, software, or in combinations thereof.

## BRIEF DESCRIPTION OF THE DRAWINGS

Further embodiments of the invention will be described with respect to the following figures, in which:

Fig. 1 shows a schematic diagram of a method for estimating a phase of a phase modulated signal according to an implementation form;

Fig. 2 shows a schematic diagram of a method for estimating a Local Oscillator Frequency Offset signal for a phase modulated signal according to an implementation form;

Fig. 3 shows a block diagram of a coherent receiver for processing a received phase modulated signal according to an implementation form;

Fig. 4 shows a block diagram of an optical transmission system comprising a coherent receiver for processing a received phase modulated signal according to an implementation form;

Fig. 5 shows a block diagram of a coherent receiver for processing a received phase modulated signal according to an implementation form;

Fig. 6 shows a block diagram of a coherent receiver for processing a received phase modulated signal according to an implementation form;

Fig. 7 shows a schematic diagram illustrating absolute values of inphase and quadrature components when using a method for estimating a phase according to an implementation form;

Fig. 8 shows a schematic diagram illustrating a difference component when using a method for estimating a phase according to an implementation form;

Fig. 9 shows a schematic diagram illustrating inphase and quadrature signs when using a method for estimating a phase according to an implementation form;

Fig. 10 shows a schematic diagram illustrating the estimated phase when using a method for estimating a phase according to an implementation form;

Fig. 11 shows a schematic diagram illustrating a constellation plot of a QPSK modulation and the according phase reference;

Fig. 12 shows a schematic diagram illustrating phase references for positive (upper diagram) and negative (lower diagram) Local Oscillator Frequency Offsets;

Fig. 13 shows a schematic diagram illustrating a phase reference for a constant Local Oscillator Frequency Offset (upper diagram) and the according differential phase reference (lower diagram) which is used to detect the sign of the LOFO;

Fig. 14 shows a schematic diagram illustrating simulation results when using a method for estimating a Local Oscillator Frequency Offset signal according to an implementation form;

Fig. 15 shows a histogram illustrating the estimation error when using a method for estimating a Local Oscillator Frequency Offset signal according to an implementation form; and

Fig. 16 shows a performance diagram illustrating bit error rates versus OSNR when using a method for estimating a Local Oscillator Frequency Offset signal according to an implementation form.

Fig. 17 shows a degradation of a 40G DQPSK transmission due to Local Oscillator Frequency Offset.

## DETAILED DESCRIPTION OF EMBODIMENTS OF THE INVENTION

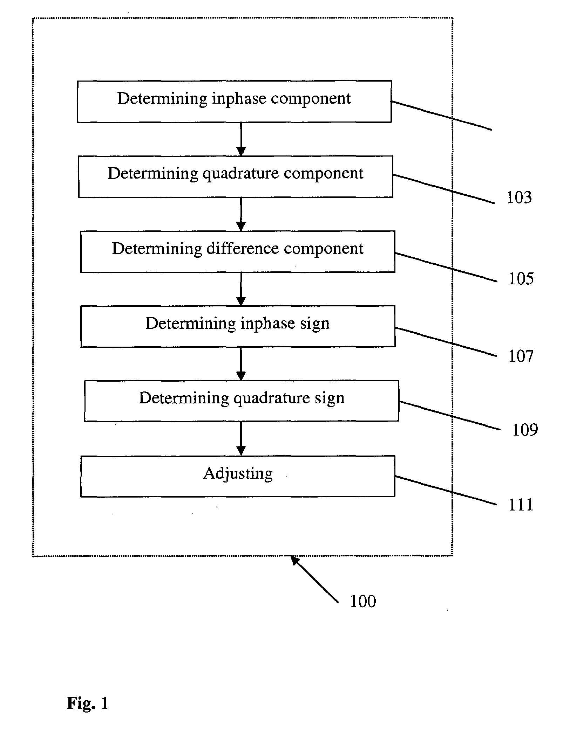

Fig. 1 shows a schematic diagram of a method for estimating a phase of a phase modulated signal according to an implementation form.

The method 100 is for estimating a phase of a phase modulated signal $Z(k)$ having an inphase component I and a quadrature component Q. The method 100 comprises: determining 101 the inphase component I of the phase modulated signal $Z(k)$; determining 103 the quadrature component Q of the phase modulated signal $Z(k)$; determining 105 a difference of absolute values of the inphase component I and the quadrature component Q to obtain a difference component ($|I|-|Q|$); determining 107 a sign of the inphase component I to obtain an inphase sign sgn(I); determining 109 a sign of the quadrature component Q to obtain a quadrature sign sgn(Q); and adjusting 111 a sign of the difference component ($|I|-|Q|$) upon the basis of the inphase sign sgn(I) and the quadrature sign sgn(Q) to obtain the phase estimate $\varphi_{est}$.

The sequence of the individual steps may be in a different order, in particular the determining the inphase component 101 and the determining the quadrature component 103 may be interchanged and the determining the difference component 105, the determining the inphase sign 107 and the determining the quadrature sign 109 may be arbitrarily interchanged.

The determining 105 a difference of absolute values of the inphase component I and the quadrature component Q to obtain a difference component ($|I|-|Q|$) may be replaced by determining 105 a difference of absolute values of the quadrature component Q and the inphase component I to obtain a difference component ($|Q|-|I|$).

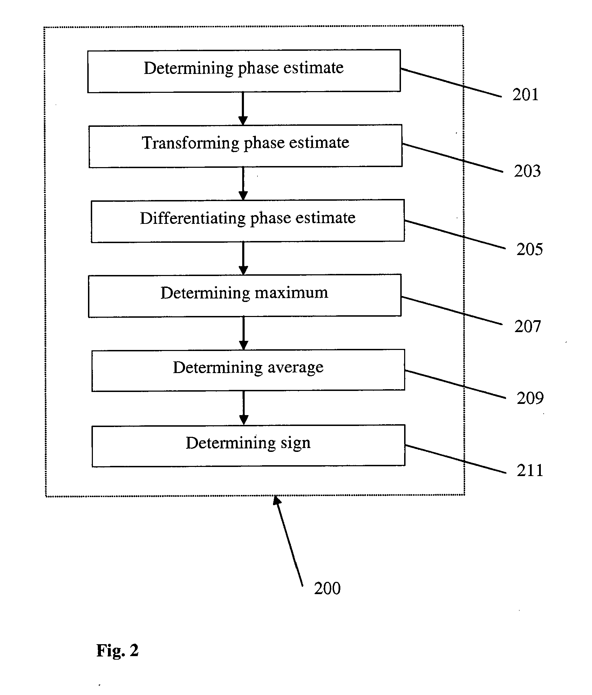

Fig. 2 shows a schematic diagram of a method for estimating a Local Oscillator Frequency Offset signal for a phase modulated signal according to an implementation form.

The method 200 is for estimating a Local Oscillator Frequency Offset signal for a phase modulated signal $Z(k)$. The method 200 comprises: determining 201 a phase estimate $\varphi_{est}$ of the phase modulated signal $Z(k)$ according to the method 100 for estimating a phase of a phase modulated signal as described with respect to Fig. 1; transforming 203 the phase estimate $\varphi_{est}$ into frequency domain to obtain a transformed phase estimate $FFT(\varphi_{est})$; differentiating 205 the phase estimate $\varphi_{est}$ with respect to time to obtain a differential phase estimate $d\varphi_{est}/dt$; determining 207 a maximum of the transformed phase estimate $FFT(\varphi_{est})$ to obtain an absolute value of the Local Oscillator Frequency Offset signal; determining 209 an average of the differential phase estimate $d\varphi_{est}/dt$ to obtain an averaged differential phase estimate $\overline{d\varphi_{est}/dt}$; and determining 211 a sign of the averaged differential phase estimate $\overline{d\varphi_{est}/dt}$ to obtain a sign of the Local Oscillator Frequency Offset signal.

The sequence of the individual steps may be in a different order, in particular the transforming the phase estimate 203 and the differentiating the phase estimate 205 may be interchanged and the determining the maximum 207 and the differentiating the phase estimate 205 may be interchanged

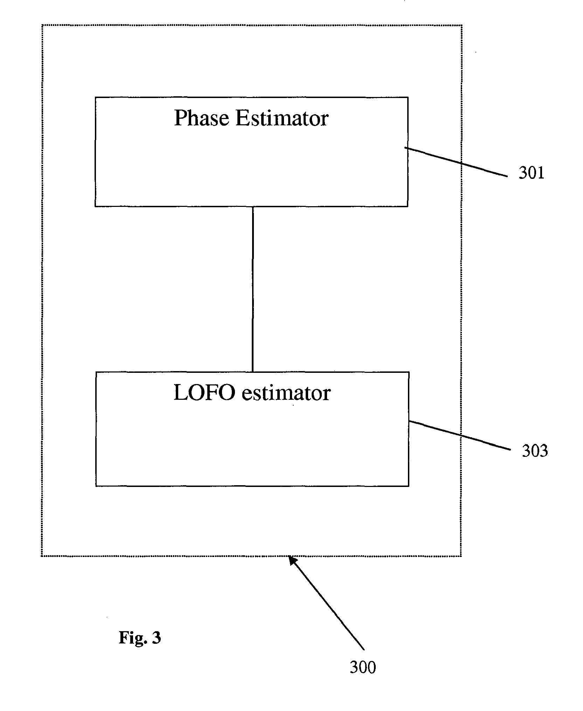

Fig. 3 shows a block diagram of a coherent receiver for processing a received phase modulated signal $Z(k)$ according to an implementation form.

The coherent receiver 300 comprises a phase estimator 301 and an oscillator frequency estimator 303. The phase estimator 301 is coupled to the oscillator frequency estimator 303 such that the oscillator frequency estimator 303 receives a phase estimate $\varphi_{est}$ estimated by the phase estimator 301. The phase estimator 301 estimates a phase of the phase modulated signal $Z(k)$ according to the method as described with respect to Fig. 1 and provides the phase estimate $\varphi_{est}$ to the oscillator frequency estimator 303. The oscillator frequency estimator 303 estimates a Local Oscillator Frequency Offset signal according to the method as described with respect to Fig. 2.

Fig. 4 shows a block diagram of an optical transmission system comprising a coherent receiver for processing a received phase modulated signal according to an implementation form.

The optical transmission system 402 comprises an optical sender 401 for providing an optical signal 450, an optical channel 409 for transmitting the optical signal 450 and a coherent receiver 400 for receiving a received optical signal 452 which corresponds to the optical signal 450 transmitted over the optical channel 409 and influenced by the optical channel 409.

The optical sender 401 comprises a laser diode 403 for providing an optical carrier signal with a center frequency $f_T$ and a given laser line-width. The optical sender 401 further comprises a QPSK modulator 405 for modulating the optical carrier signal with a user data signal to provide a modulated optical data signal. The optical sender 401 further comprises a multiplexer for multiplexing the modulated optical data signal with other modulated optical data signals to provide a multiplexed optical data signal. The multiplexed optical signal may be multiplexed according to a Wavelength Division Multiplex (WDM) algorithm. The multiplexed optical signal corresponds to the optical signal 450 to be transmitted.

The optical channel 409 comprises a plurality of amplifier stages and optical fibers for transmitting the optical signal 450. An output of the optical channel 409 is coupled to an input of the coherent receiver 400, such that the coherent receiver 400 receives the received optical signal 452 which corresponds to the optical signal 450 transmitted over the optical channel 409 at its input.

The coherent receiver 400 comprises a de-multiplexer 423, a polarization beam splitter (PBS) 425, two 6-port 90-degree optical hybrids 427, 429, two sets of balanced detectors 433, two sets of trans-impedance amplifiers (TIA) 435, four analog-digital converters (ADC) 437 and a digital signal processor (DSP) 439.

The de-multiplexer 423 is coupled to the input port of the coherent receiver 400 and receives the received optical signal 452 at its input. The de-multiplexer 423 demultiplexes the received optical signal 452 into a plurality of demultiplexed optical signals following a plurality of receiving paths in the coherent receiver 400. Fig. 4 depicts only one of the pluralities of receiving paths. In the following one of these receiving paths is illustrated. The demultiplexed optical signal following one receiving path is provided to the polarization beam splitter 425 which splits the signal into its X-polarized and its Y-polarized signal components. The X-polarized signal component is provided to a first input, which is a signal input, of the first 6-port 90-degree optical hybrid 427 and the Y-polarized signal component is provided to a first input, which is a signal input, of the second 6-port 90-degree optical hybrids 429. A second input, which is a LO input, of the first 6-port 90-degree optical hybrid 427 receives a Local Oscillator signal from a laser diode 431 providing the Local Oscillator signal having a center frequency $f_B$. The same Local Oscillator signal is provided to a second input, which is a LO input, of the 6-port 90-degree optical hybrid 429.

The 90° Optical Hybrids 427, 429 comprise two inputs for signal and LO and four outputs mixing signal and LO. The 90° Optical Hybrids 427, 429 deliver both amplitude and phase of signal, amplify signal linearly and are suitable for both homodyne and heterodyne detection.

The six-port 90° Optical Hybrids 427, 429 comprise linear dividers and combiners interconnected in such a way that four different vectorial additions of a reference signal (LO) and the signal to be detected are obtained. The levels of the four output signals are detected by balanced receivers 433. By applying suitable baseband signal processing algorithms, the amplitude and phase of the un-known signal can be determined. For optical coherent detection, each of the six-port 90° optical hybrids 427, 429 mixes the incoming signal with the four quadratural states associated with the reference signal in the complex-field space. Each of the optical hybrids 427, 429 then delivers the four light signals to two pairs of balanced detectors 433 which detect a respective optical signal and provide a corresponding electrical signal to the succeeding set of trans-impedance amplifiers 435, one trans-impedance amplifier for each pair of balanced detectors 433. The electrical signals amplified by the trans-impedance amplifiers 435 are analog-digitally converted by the set of A/D converters 437 and then provided as digital signals 454 to a digital signal processing 439. The digital signal processing may be implemented as software on a Digital Signal Processor (DSP) or on a micro-controller or as hardware circuit within an application specific integrated circuit (ASIC). In addition, to limit the power consumption associated with inter-chip communication, both the ADCs 437 and digital signal processing 439 may be preferably integrated on a single-chip.

The digital signal processing 439 applies one of the methods as described with respect to Fig. 1 and Fig. 2. The hardware for digital signal processing 439 may be structured as described with respect to Fig. 3.

The optical system 402 is based on a coherent detection scheme which detects not only the optical signal's amplitude but phase and polarization as well. With the optical coherent detection system's 402 increased detection capability and spectral efficiency, more data can be transmitted within the same optical bandwidth. More over, because coherent detection allows an optical signal's phase and polarization to be detected and therefore measured and processed, transmission impairments which previously presented challenges to accurate data reception, can be mitigated electronically when the received optical signal 452 is converted into the electronic domain.

The optical system 402 provides a method to stabilize frequency difference between the sender 401 and the receiver 400 within close tolerances. A Local Oscillator Frequency Offset is determined as $f_R$-$f_T$, wherein $f_R$ is the frequency of the received optical signal 452 and $f_T$ is the frequency of the optical signal 450 to be transmitted over the optical channel 409. The optical system 402 further provides the capability to minimize or mitigate frequency chirp or other signal inhibiting noise and the availability of an "optical mixer" to properly combine the signal and the local amplifying light source or local oscillator (LO). The optical system 402 has the following advantages over traditional detection technologies:

- An increase of receiver sensitivity by about 15 to 20 dB compared to incoherent systems, therefore, permitting longer transmission distances (up to an additional 100 km near 1.55 $\mu$m in fiber). This enhancement may be particularly significant for space based laser communications where a fiber-based solution is not available.

- Compatibility with complex modulation formats such as DPSK or DQPSK.

- Concurrent detection of a light signal's amplitude, phase and polarization allowing more detailed information to be conveyed and extracted, thereby increasing tolerance to network impairments, such as chromatic dispersion, and improving system performance.

- Better rejection of interference from adjacent channels in Dense Wavelength Division Multiplex (DWDM) systems, allowing more channels to be packed within the transmission band.

- Linear transformation of a received optical signal 452 to an electrical signal 454 that can then be analyzed using modern DSP technology 439.

- Suitable for secured communications.

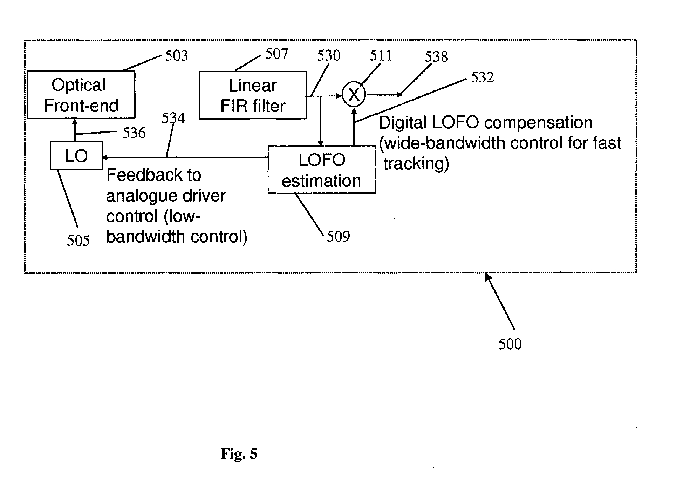

Fig. 5 shows a block diagram of a coherent receiver for processing a received phase modulated signal according to an implementation form.

The coherent receiver 500 comprises an optical front-end 503, a linear finite-impulse response (FIR) filter 507, a local oscillator (LO) 505, a LOFO estimation unit 509 and a multiplier 511, i.e. a demodulator, for digital local oscillator frequency offset compensation. The optical front-end 503 receives an optical signal, which may correspond to the received optical signal 452 as described with respect to Fig. 4. The optical front-end 503 may comprise the same components as described with respect to Fig. 4, i.e. a de-multiplexer 423, a polarization beam splitter (PBS) 425, two 6-port 90-degree optical hybrids 427, 429, two sets of balanced detectors 433, two sets of trans-impedance amplifiers (TIA) 435 and four analog-digital converters (ADC) 437. The optical front-end 503 provides digital signals 454 as described with respect to Fig. 4 to the linear FIR filter 507. The linear FIR filter 507 is configured to equalize the digital signals and to provide equalized digital signals 530 at its output. With these equalized digital signals 530, the LOFO estimation unit 509 estimates the local oscillator frequency offset of the received optical signal versus the local oscillator frequency.

A feedback loop provides the local oscillator frequency offset to the Local Oscillator 505 and is used for controlling the driver of the Local Oscillator 505. The driver of the Local Oscillator 505 may adapt the frequency of the local oscillation generated by the Local Oscillator and provide an adapted LO signal to the optical front-end 503. Alternatively or additionally, a LOFO signal 532 provided by the LOFO estimation unit 509 is used for digital LOFO compensation after equalization in the linear filter 507. The equalized digital signals 530 having a frequency offset to the local oscillator frequency are demodulated in the demodulator 511 by a multiplication with the frequency offset, i.e. the LOFO signal 532 provided by the LOFO estimation unit 509. The demodulator 511 provides the LOFO-compensated digital signals 538 at its output. The demodulator 511 may implement digital feed-forward (FFW) compensation. The LOFO estimation unit 509 further performs wide-bandwidth control for fast tracking.

The LOFO estimation unit 509 may be implemented according to the coherent receiver as described with respect to Fig. 3. It may implement the methods as described with respect to Figs. 1 and 2. The LOFO estimation unit 509 may correspond to the Digital Signal Processing unit 439 as described with respect to Fig. 4. Depending on the speed requirements, the estimation my be implemented in high-speed ASIC, in a micro-controller, in a DSP or in any other side-processor. The LOFO estimation in the LOFO estimation unit 509 is performed after the linear filtering in the linear filter 507 but before demodulation in the demodulator 511. The estimated LOFO can control the driver of the LO by analogue feedback control loop or can be used for digital LOFO compensation.

In an implementation form, a phase estimation is performed in the LOFO estimation unit 509 according to the method as described with respect to Fig. 1. The compensated phase may be used for feed-forward (FFW) phase error compensation.

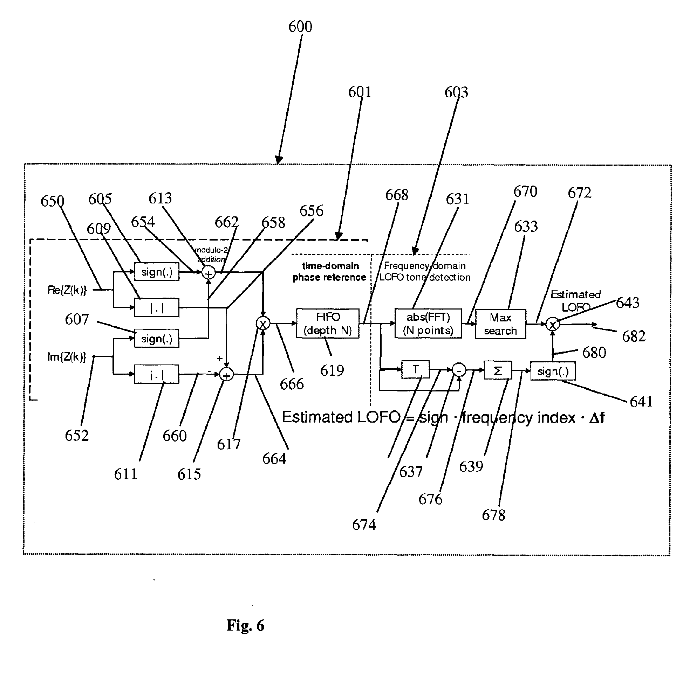

Fig. 6 shows a block diagram of a coherent receiver for processing a received phase modulated signal according to an implementation form.

The coherent receiver 600 comprises a phase estimator 601 and a LOFO estimator 603 corresponding to the phase estimator 301 and the LOFO estimator 303 as described with respect to Fig. 3. The coherent receiver 600 receives an optical signal Z(k) corresponding to the received optical signal 452 as described with respect to Fig. 4 at its input

EP 2 583 424 B1

which corresponds to the input of the phase estimator 601. The received optical signal comprises an inphase (I) signal component Re{Z(k)} 650 and a quadrature (Q) signal component Im{Z(k)} 652 which are provided at two inputs of the phase estimator 601.

The phase estimator 601 comprises two sign processing units 605 and 607, two absolute value processing units 609 and 611, one modulo-2 adder 613, one subtracting unit 615, one multiplier 617 and one First-In-First-Out (FIFO) memory 619. The first sign processing unit 605 forms the arithmetic sign (sgn(I)) 654 of the inphase (I) signal component Re{Z(k)} 650 of the received optical signal and the second sign processing unit 607 forms the arithmetic sign (sgn(Q)) 658 of the quadrature (Q) signal component Im{Z(k)} 650 of the received optical signal. The first absolute value processing unit 609 forms the absolute value |I| 656 of the inphase (I) signal component Re{Z(k)} 650 of the received optical signal and the second absolute value processing unit 611 forms the absolute value |Q| 660 of the quadrature (Q) signal component Im{Z(k)} 652 of the received optical signal. The modulo-2 adder 613 forms a modulo-2 addition of the arithmetic sign (sgn(I)) 654 of the inphase (I) signal component Re{Z(k)} 650 and the arithmetic sign (sgn(Q)) 658 of the quadrature (Q) signal component Im{Z(k)} 652 and provides a sign multiplied component 662.

The modulo-2 addition may be performed by an XOR gate. When a first input is 0 and a second input is 0 or when the first input is 1 and the second input is 1, the output is 0. When the first input is 0 and the second input is 1 or when the first input is 1 and the second input is 0, the output is 1. Thus, the modulo-2 addition may be described as a sign multiplication.

The multiplier 617 performs a multiplication of the difference component 664 and the sign multiplied component 662 and provides the phase estimate $\varphi_{est}$ 666.

The phase estimator 601 further comprises a FIFO memory 619 of depth N which stores N values of the phase estimate $\varphi_{est}$ 666 and may be used for forming an average value of the phase estimate $\varphi_{est}$ 668. The phase estimate $\varphi_{est}$ 666 or its average value is provided at an output of the phase estimator 601.

The sign multiplication of the inphase sign (sgn(I)) 654 and the quadrature sign (sgn(Q)) 658 represents an adjusting of the difference component 664 or represents a weighting of the difference component 664 with a sign resulting from the sign multiplication. When performing the modulo-2 addition 613, the phase estimator 601 estimates the phase by using only logic addition and real number addition operations.

In an implementation form, the phase to be compensated is a carrier phase.

In an implementation form, not depicted in Fig. 6, the receiver 600 is configured for compensating a carrier phase offset between the phase modulated signal Z(k) and a local oscillator signal by using the phase estimate $\varphi_{est}$.

The LOFO estimator 603 comprises an absolute value FFT unit 631, a maximum search unit 633, a time delay unit 635, a subtractor 637, an averaging unit 639, an arithmetic sign unit 641 and a multiplier 643. The LOFO estimator 603 receives the phase estimate $\varphi_{est}$ 668 at its input and provides it to the absolute value FFT unit 631 which applies a Fast Fourier transform of size N to the phase estimate $\varphi_{est}$ 668 to obtain a frequency-transformed phase estimate (FFT($\varphi_{est}$)). The absolute value FFT unit 631 further determines an absolute value of the frequency-transformed phase estimate (FFT($\varphi_{est}$)) to obtain an absolute value 670 of the Local Oscillator Frequency Offset signal which is provided at its output. The maximum search unit 633 is coupled to the output of the absolute value FFT unit 631 for finding a maximum frequency value 672 of the absolute value 670 of the Local Oscillator Frequency Offset signal.

The LOFO estimator 603 also provides the phase estimate $\varphi_{est}$ 668 to the time delay unit 635 which delays the phase estimate $\varphi_{est}$ 668 by a time delay T and provides a delayed phase estimate $\varphi_{est,T}$ at its output. The subtractor 637 subtracts the phase estimate $\varphi_{est}$ 668 from the delayed phase estimate $\varphi_{est,T}$ and provides a differential phase estimate (d$\varphi_{est}$/dt) 676 at its output. In an alternative implementation form, the subtractor 637 subtracts the delayed phase estimate $\varphi_{est,T}$ from the phase estimate $\varphi_{est}$ 668 and provides the differential phase estimate (d$\varphi_{est}$/dt) 676 at its output. The time delay unit 645 together with the subtractor 637 form a differentiating unit for differentiating the phase estimate $\varphi_{est}$ 668 with respect to time. In an alternative implementation form, other implementations of a differentiating unit are used, e.g. based on a multiplication of the phase estimate $\varphi_{est}$ 668 with the conjugate complex of the delayed phase estimate $\varphi_{est,T}$.

The averaging unit 639 forms an average value of the differential phase estimate (d$\varphi_{est}$/dt) 676 providing an averaged differential phase estimate ($\overline{d\varphi_{est}/dt}$) 678. The arithmetic sign unit 641 determines an arithmetic sign of the averaged differential phase estimate ($\overline{d\varphi_{est}/dt}$) 678 and provides a sign 680 of the Local Oscillator Frequency Offset signal at its output.

The multiplier 643 is configured to multiply the maximum frequency value 672 of the absolute value 670 of the Local Oscillator Frequency Offset signal with the sign 680 of the Local Oscillator Frequency Offset signal and provides the estimated local oscillator frequency offset 682 at its output which is an output of the LOFO estimator 603 and an output of the coherent receiver 600. The estimated local oscillator frequency offset 682 is provided as a signed frequency index and may be multiplied by the frequency resolution $\Delta f$ of the FFT in order to obtain the estimated LOFO signal in units of Hertz. In an implementation form, a succeeding multiplication unit performs such multiplication. In other words, the Local Oscillator Frequency Offset signal is obtained as a product of the absolute value of the Local Oscillator Frequency Offset signal, of the sign of the Local Oscillator Frequency Offset signal and of a frequency resolution $\Delta f$ of the frequency transformation. In an implementation form, the frequency resolution $\Delta f$ is determined as a quotient of a baudrate of the digitally modulated complex-valued data signal, i.e. the inphase component 650 and the quadrature component 652 of the received optical signal, and four times a size N of the transformation used for transforming the phase estimate $\varphi_{est}$ 668 into frequency domain.

Fig. 6 describes that the frequency transformation applied to the phase estimate $\varphi_{est}$ 668 is a Fast Fourier Transform. In other implementation forms, that frequency transform is any other frequency transform, e.g. a Discrete Fourier Transform (DFT), a Discrete Cosine Transform (DCT), a Discrete Sine Transform (DST) or inverse forms thereof, e.g. Inverse Fast Fourier Transform, Inverse DFT, Inverse DCT or Inverse DST.

In an implementation form, the coherent receiver 600 comprises a compensation unit (not depicted in Fig. 6) for compensating a carrier frequency offset between the phase modulated signal Z(k) and a local oscillator signal by using the Local Oscillator Frequency Offset signal. In an implementation form, the phase modulated signal Z(k) is a BPSK or a QPSK signal. In an implementation form, the phase modulated signal Z(k) is an optical BPSK or an optical QPSK signal.

The estimation can be performed on certain blocks. No continuous estimation is required as the LOFO changes only slowly. The resolution of the frequency domain (FD) LOFO estimation depends on the FFT-size N and may be determined as $\Delta f$ = Baudrate/N/4. The maximum LOFO estimation range refers to Baudrate/8 (3.5 GHz @ 28 GBaud). For 28 GBaud the following table represents the relation between FFT-size N and frequency resolution $\Delta f$:

| For 28 GBaud | |
|---|---|
| **N** | **$\Delta$f** |
| **128** | **43 MHz** |
| **1024** | **5MHz** |

In an implementation form, the coherent receiver 600 described here is implemented in software. Then, the units described above are implemented as software modules performing arithmetic-logical or storing operations. The inputs and outputs of the units then describe the data flow between the respective modules.

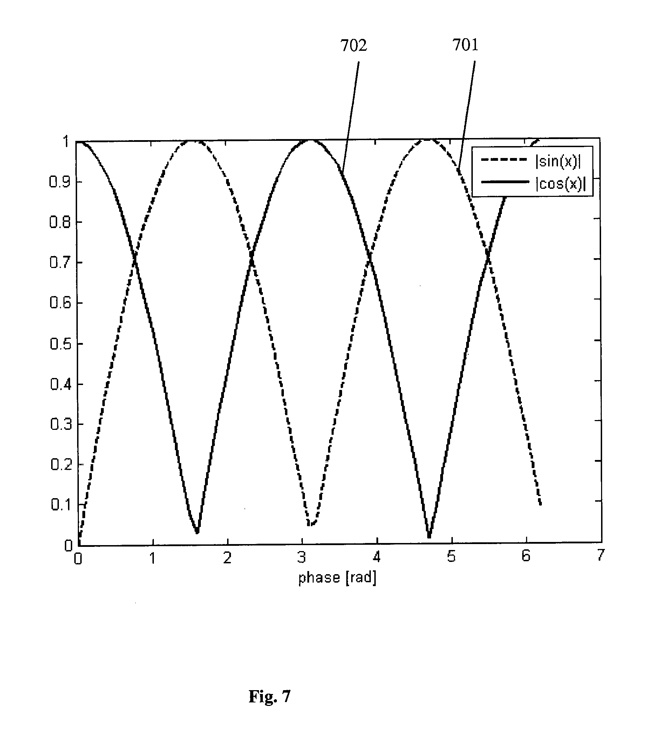

Fig. 7 shows a schematic diagram illustrating absolute values of inphase and quadrature components when using a method for estimating a phase according to an implementation form.

According to the method as described with respect to Fig. 1 and according to the phase estimator 601 described with respect to Fig. 6, the phase reference can be represented as:

*Phase reference $\varphi_{est} \approx sign(I) \cdot sign(Q) \cdot [|I| - |Q|]$ with inphase component I = $\Re\{s[n]\}$ (real part) and quadrature component Q = $\Im\{s[n]\}$ (imaginary part) of a discrete sequence s[n] modulated by QPSK and impaired by a phase distortion.*

Assume a modulated signal $s(t) = a(t) \cdot exp(\varphi(t))$ defined by amplitude $a(t)$ and phase $\varphi(t)$ with

$$s(t) = \exp(j\varphi_p(t)) \sum_{n=-\infty}^{\infty} \big(d_I(n) + j \cdot d_Q(n)\big) * g(t - nT)$$

- , where $exp(j\varphi_p(t))$ refers to the phase distortion that should be estimated,
- $d_I(n) + j \cdot d_Q(n)$ refers to the bipolar random data sequence with $d_I, d_Q \in$ [-1;+1]
- and $g(t - nT)$ refers to the pulse shape shifted by whole number multiples n of the symbol duration T. (* convolution)

After equalization and synchronization, the signal is represented by one sample per symbol sampled at time instants $t=nT$, which refers to the discrete sequence

$$s[n] = \exp(j\varphi_p[n])\big(d_I[n] + j \cdot d_Q[n]\big)g(t = 0)$$
$$= a[n]\exp(j\varphi_p[n])\big(d_I[n] + j \cdot d_Q[n]\big)$$

If there are no amplitude distortions, we can assume a constant amplitude $a[n] = a$. It is clear that the random data adds arbitrary shifts of $\gamma \in$ [$-\pi/2, 0, \pi/2, \pi$], which arbitrarily maps the phase noise into any of the four quadrants. In other words, the modulation can be described as a discrete random variable with uniform distribution.

Thus, we can rewrite

$$s[n] = a \cdot \exp(j\varphi_p[n])\big(d_I[n] + j \cdot d_Q[n]\big)$$
$$= a \cdot \big(\cos(\varphi_p[n] + \gamma[n]) + j\sin(\varphi_p[n] + \gamma[n])\big)$$
$$= a \cdot \big(I[n] + jQ[n]\big)$$

With $a = 1$, the absolute values of $I$ and Q are plotted in Fig. 7 as $|\sin(x)|$, 701 and $|\cos(x)|$, 702. It can be seen that for each quadrant, each section $[0:\pi/2],[\pi/2:\pi],[\pi:3\pi/2][3\pi/2:2\pi]$, we observe the same constellation. Therefore, the operation $|I|$ and $|Q|$ is suitable to remove the modulation by the random process $\gamma$.

It can be further shown that the difference of the absolute values refers to

$$I - Q = \cos(\varphi_p) - \sin(\varphi_p)$$
$$= \sqrt{2}\cos(\varphi_p + \pi/4)$$

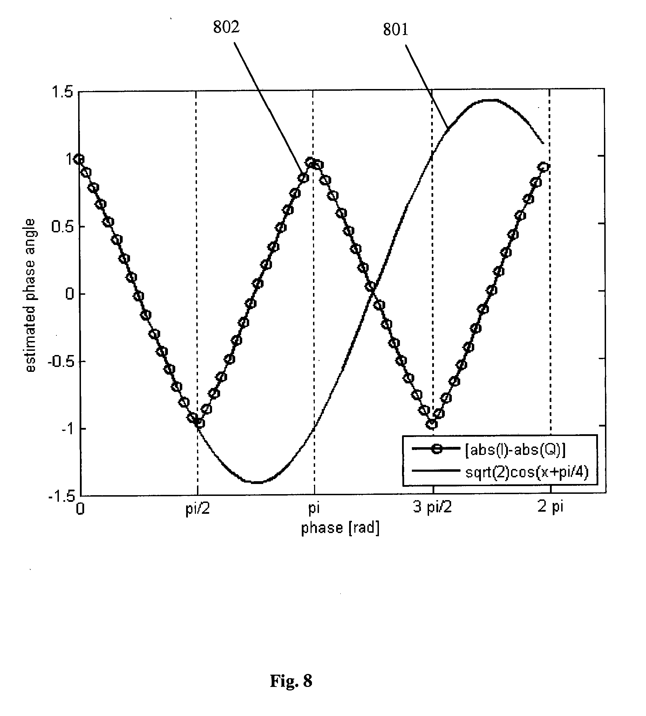

limiting the total phase to the first quadrant $[0:\pi/2]$ as depicted in Fig. 8, first section of phase illustrating the first quadrant. In the other quadrants we obtain

| $[\pi/2:\pi]$ | $\| I \| - \| Q \| = -\cos(\varphi_p) - \sin(\varphi_p)$<br>$= -\sqrt{2}\sin(\varphi_p + \pi/4) = -\sqrt{2}\cos(\varphi_p + \pi/4 + \pi/2)$ |
|---|---|
| $[\pi:3\pi/2]$ | $\| I \| - \| Q \| = -\cos(\varphi_p) + \sin(\varphi_p)$<br>$= -\sqrt{2}\cos(\varphi_p + \pi/4) = \sqrt{2}\cos(\varphi_p + \pi/4 + \pi)$ |
| $[3\pi/2:2)\pi]$ | $\| I \| - \| Q \| = \cos(\varphi_p) + \sin(\varphi_p)$<br>$= \sqrt{2}\sin(\varphi_p + \pi/4) = -\sqrt{2}\cos(\varphi_p + \pi/4 + 3\pi/2)$ |

Fig. 8 depicts the two curves 801 illustrating the relation sqrt(2)cos(x+pi/4) and 802 illustrating the relation [abs(I)-abs(Q)] in the four quadrants as described above.

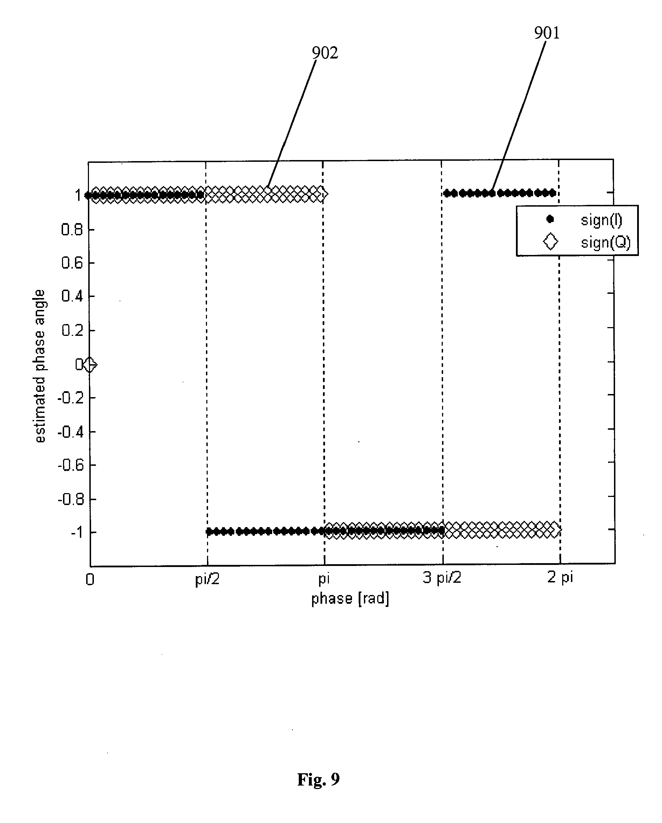

With the approximation $\sin(x) \approx x$ for small angels we can obtain a *phase reference* in each quadrant. The *phase reference* is almost identical in each quadrant as can be seen from Fig. 8, but the gradient is in opposite direction for the second and the third quadrant. This can be corrected taking into account the sign of $I$ and Q. The sign of I 901 and the sign of Q 902 is depicted in Fig. 9 for the said four quadrants. Therefore, we obtain the *phase reference* 1001

$$\varphi_{est} \approx sign(I) \cdot sign(Q) \cdot [\| I \| - \| Q \|]$$

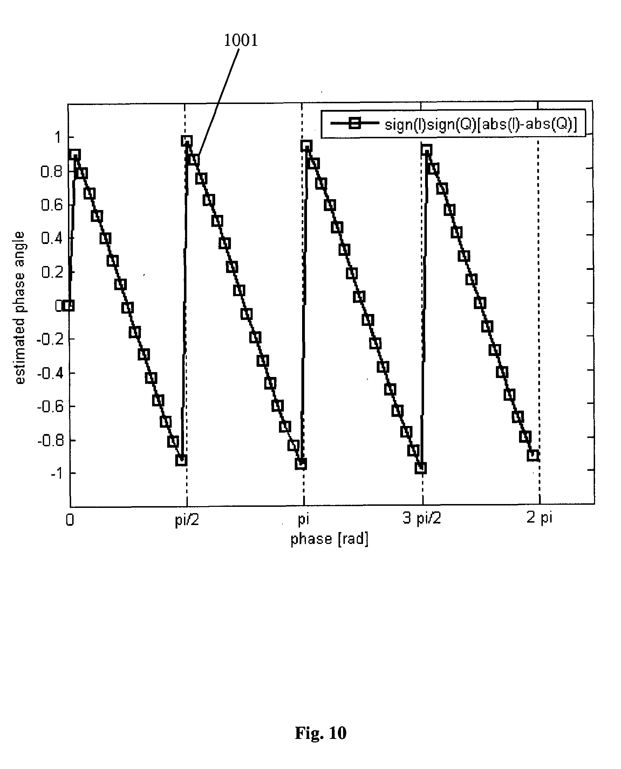

as depicted in Fig. 10.

Strictly speaking the estimated phase refers to a modulo-4 representative of the given phase scaled by $\pi$, which is additionally offset by $\pi/4$. Still, it is a proportional linear monotonic function suitable to estimate the phase.

It should be noted that in general, the amplitude term still remains such that actually $\varphi_{est} \approx a \cdot sign(I) \cdot sign(Q) \cdot [|I|-|Q|]$. For BPSK and QPSK modulation, a can be regarded as constant after equalization such that $\varphi_{est}$ is only a proportional reference to the phase $\varphi_p$. Only if a is normalized to unity, $\varphi_{est}$ can act as a phase estimation. Still, the gradient can be used for LOFO estimation, where a constant amplitude a does not affect the estimation.

For other modulation, e.g. 16QAM, the inner or outer constellations with minimum or maximum amplitude could be chosen. In an implementation form, 16QAM is used and the inner or outer constellations with minimum or maximum amplitude are chosen

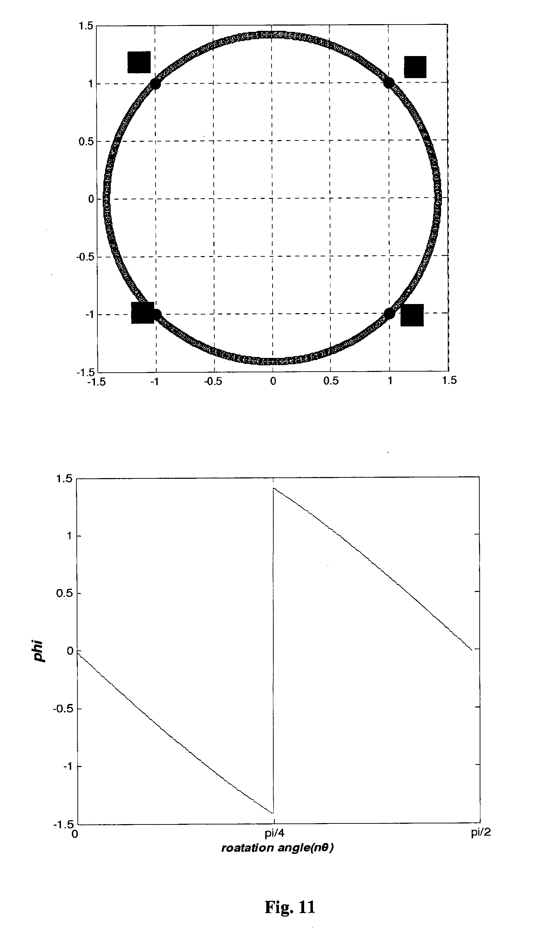

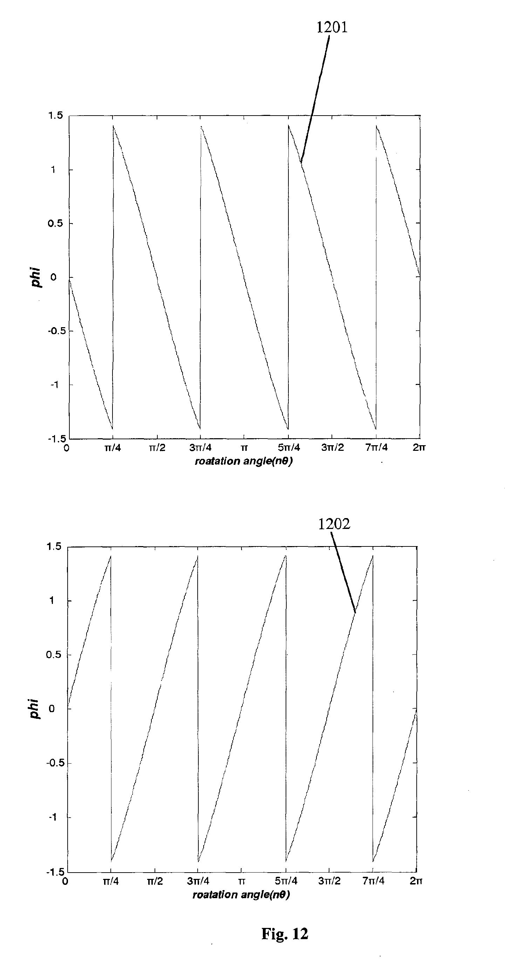

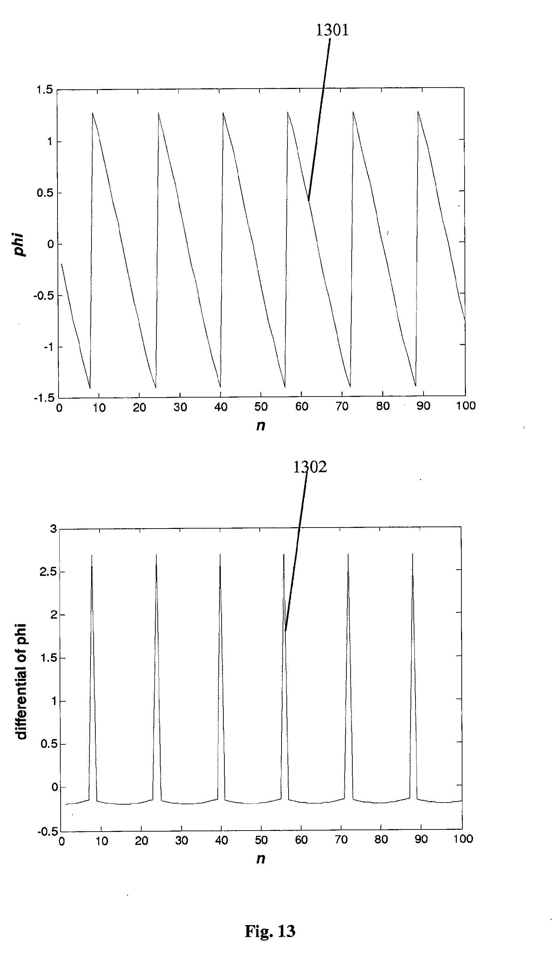

Fig. 11 shows a schematic diagram illustrating a constellation plot of a QPSK modulation and the according phase reference. Fig. 12 shows a schematic diagram illustrating a phase reference 1201 for positive (upper diagram) and a phase reference 1202 for negative (lower diagram) Local Oscillator Frequency Offsets and Fig. 13 shows a schematic diagram illustrating a phase reference 1301 for a constant Local Oscillator Frequency Offset LOFO (upper diagram) and the according differential phase reference 1302 (lower diagram) which is used to detect the sign of the LOFO.

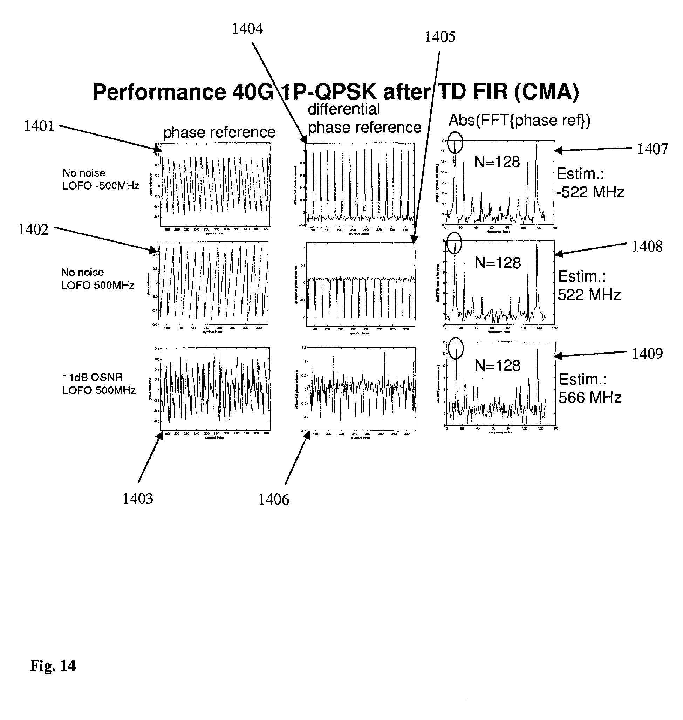

Fig. 14 shows a schematic diagram illustrating simulation results when using a method for estimating a Local Oscillator Frequency Offset signal according to an implementation form.

The simulation results verify the approximation of this LOFO estimation scheme according to the methods and devices as described with respect to the preceding figures. The simulations are based on a 22.3G baud rate coherent 1 P-QPSK system, the channel impairments are randomly generated, with Chromatic Dispersion (CD) ranging from -1918~19934ps, Differential Group Delay (DGD) ranging from 4~63ps, Polarization dependent loss (PDL) ranging from 0~6dB and Local Oscillator Frequency Offset ranging from -2G~2GHz.

This LOFO estimation was put after the Time Domain (TD) 2x2 Multi Input Multi Output (MIMO) equalizer which may correspond to the Linear FIR filter 507 as described with respect to Fig. 5. 1024 points FFT is used to get the absolute value of LOFO. The average of the differential phase is used to get the sign of LOFO.

The first graph 1401 illustrates the phase reference according to a first simulation environment, i.e., when no noise is present and a LOFO of -500 MHz is applied. The second graph 1402 illustrates the phase reference according to a second simulation environment, i.e., when no noise is present and a LOFO of 500 MHz is applied. The third graph 1403 illustrates the phase reference according to a third simulation environment, i.e., when noise is present according to an OSNR of 11dB and a LOFO of 500 MHz is applied.

The fourth graph 1404 illustrates the differential phase reference for the first simulation environment. The fifth graph 1405 illustrates the differential phase reference for the second simulation environment. The sixth graph 1406 illustrates the differential phase reference for the third simulation environment. The seventh graph 1407 illustrates the absolute values of the Fast Fourier Transform of the phase reference for the first simulation environment. The eighth graph 1408 illustrates the absolute values of the Fast Fourier Transform of the phase reference for the second simulation environment. The ninth graph 1409 illustrates the absolute values of the Fast Fourier Transform of the phase reference for the third simulation environment.

The differential phase references depicted in the fourth to sixth graphs correspond to the differential phase estimate ($d\varphi_{est}/dt$) 676 as described with respect to Fig. 6 and the absolute values of the Fast Fourier Transform of the phase reference as depicted in the seventh to ninth graphs correspond to the absolute value 670 of the Local Oscillator Frequency Offset signal as described with respect to Fig. 6.

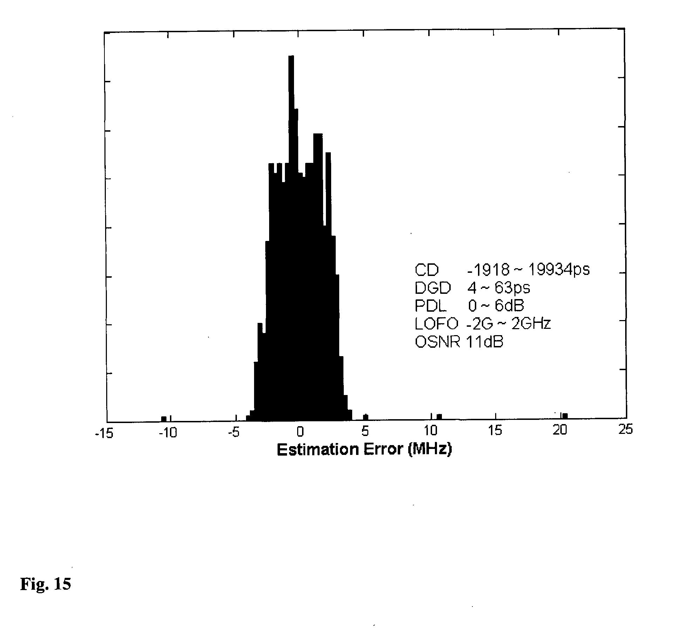

Fig. 15 shows a histogram illustrating the estimation error when using a method for estimating a Local Oscillator Frequency Offset signal according to an implementation form.

Test results depicted in the histogram show that for the third simulation environment, estimation errors are mainly distributed between -4~4MHz, which is highly accurate and does not cause any performance degradation.

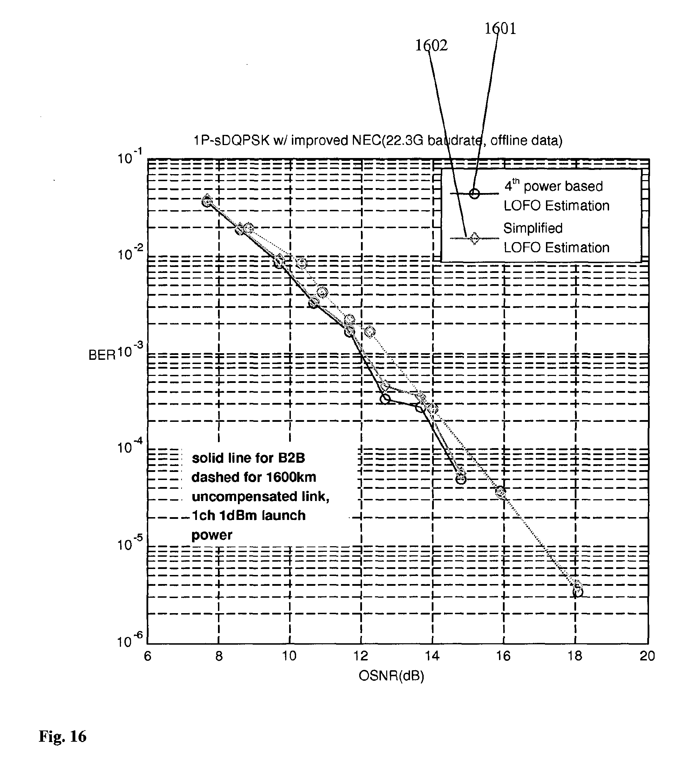

Fig. 16 shows a performance diagram illustrating bit error rates versus OSNR when using a method for estimating a Local Oscillator Frequency Offset signal according to an implementation form. The diagram represents test results with 40G offline data for a carrier-phase estimation (CPE)-free demodulation by combination of a simplified LOFO compensation according to the methods and devices as described with respect to the preceding figures, soft-differential (SD) decoding and non-redundant error correction (NEC).

The solid lines illustrates the results for the back-to-back (B2B) configuration. The dashed lines illustrate the results for the configuration of one channel through 1600km, uncompensated link, 1 dBm launch power. The curves (solid and dashed) 1601 represent the reference measurements with a 4th power based LOFO estimation according to a Viterbi&Viterbi (V&V) LOFO estimation scheme requiring computation of 4th powers. The curves (solid and dashed) 1602 represent the measurements with a coherent receiver 300 as described with reference to Fig. 3 implementing the methods as described with reference to Figs. 1 and 2. The coherent receiver 300 implements a simplified LOFO estimation without requiring computation of 4th powers, the solution is multiplier-free. From both curves 1601 and 1602 it can be seen that the performance is nearly the same.

Methods as described herein can be applied for LOFO estimation in all digital coherent receivers. If the signal amplitude can be approximated to be constant, these methods may also replace the phase estimation if applicable. The LOFO estimation may be performed during the initialization in a programme code of a micro-controller as a side-process of the ASIC. For continuous operation tracking time-varying changes in phase and frequency, the methods may be implemented in the data-path of the ASIC. Alternatives with sub-optimum performance or large complexity are the state of the art technologies, which are Viterbi&Viterbi or Costas Loop.

Methods as described herein provide carrier phase estimation for carrier recovery in coherent detection receivers with digital equalisation and synchronisation.

Methods as described herein provide an estimation of a phase reference by using only low-complexity multiplier-free operations, by determining the LOFO magnitude from the spectrum of the phase reference and by determining the sign of the LOFO by the differential phase reference.

General purpose computers may implement the foregoing methods and computer programs, in which the computer housing may house a CPU (central processing unit), memory such as DRAM (dynamic random access memory), ROM (read only memory), EPROM (erasable programmable read only memory), EEPROM (electrically erasable programmable read only memory), SRAM (static random access memory), SDRAM (synchronous dynamic random access memory), and Flash RAM (random access memory), and other special purpose logic devices such as ASICs (application specific integrated circuits) or configurable logic devices such GAL (generic array logic) and reprogrammable FPGAs (field programmable gate arrays).

Each computer may also include plural input devices (for example, keyboard, microphone and mouse), and a display controller for controlling a monitor. Additionally, the computer may include a floppy disk drive; other removable media magneto optical media); and a hard disk or other fixed high-density media drives, connected using an appropriate device bus such as a SCSI (small computer system interface) bus, and Enhanced IDE (integrated drive electronics) bus, or an Ultra DMA (direct memory access) bus. The computer may also include a compact disk reader, a compact disk reader/writer unit, or a compact disc jukebox, which may be connected to the same device bus or to another device bus.

The invention envisions at least one computer readable medium. Examples of computer readable media include compact discs, hard disks, floppy disks, tape, magneto optical disks, PROMs (for example, EPROM, EEPROM, Flash EPROM), DRAM, SRAM, SDRAM. Stored on any one or on a combination of computer readable media is software for controlling both the hardware of the computer and for enabling the computer to interact with other elements, to perform the functions described above. Such software may include, but is not limited to, user applications, device drivers, operating systems, development tools, and so forth. Such computer readable media further include a computer program product including computer executable code or computer executable instructions that, when executed, causes a computer to perform the methods disclosed above. The computer code may be any interpreted or executable code, including but not limited to scripts, interpreters, dynamic link libraries, Java classes, complete executable programs, and the like.

From the foregoing, it will be apparent to those skilled in the art that a variety of methods, systems, computer programs on recording media, and the like, are provided.

The present disclosure also supports a computer program product including computer executable code or computer executable instructions that, when executed, causes at least one computer to execute the performing and computing steps described herein.

The present disclosure also supports a system configured to execute the performing and computing steps described herein.

Many alternatives, modifications, and variations will be apparent to those skilled in the art in light of the above teachings. Of course, those skilled in the art readily recognize that there are numerous applications of the invention beyond those described herein. While the present inventions has been described with reference to one or more particular embodiments, those skilled in the art recognize that many changes may be made thereto without departing from the present invention. It is therefore to be understood that within the scope of the appended claims, the inventions may be practiced otherwise than as specifically described herein.

**Claims**

1. Method (200) for estimating a Local Oscillator Frequency Offset signal for a phase modulated signal, Z(k), having an inphase component, I, and a quadrature component, Q, the method comprising:

    determining (201) a phase estimate, $\varphi_{est}$, of the phase modulated signal, Z(k) by
    determining (101) the inphase component, I, of the phase modulated signal, Z(k);
    determining (103) the quadrature component, Q, of the phase modulated signal, Z(k);
    determining (105) a difference of absolute values of the inphase component, I, and the quadrature component, Q, to obtain a difference component, $|I|-|Q|$; determining (107) a sign of the inphase component, I, to obtain an inphase sign, sgn(I);
    determining (109) a sign of the quadrature component, Q, to obtain a quadrature sign, sgn(Q); and
    adjusting (111) a sign of the difference component, $|I|-|Q|$, upon the basis of the inphase sign, sgn(I), and the quadrature sign, sgn(Q) to obtain the phase estimate, $\varphi_{est}$;
    transforming (203) the phase estimate, $\varphi_{est}$, into frequency domain to obtain a transformed phase estimate, $FFT(\varphi_{est})$;
    differentiating (205) the phase estimate, $\varphi_{est}$, with respect to time to obtain a differential phase estimate, $d\varphi_{est}/dt$;
    determining (207) an absolute value of the transformed phase estimate, $FFT(\varphi_{est})$, to obtain an absolute value of the Local Oscillator Frequency Offset signal;
    determining (207) a maximum frequency value of the absolute value of the Local Oscillator Frequency Offset signal;

determining (209) an average of the differential phase estimate, $d\varphi_{est}/dt$, to obtain an averaged differential phase estimate, $\overline{d\varphi_{est}/dt}$; and

determining (211) a sign of the averaged differential phase estimate, $\overline{d\varphi_{est}/dt}$, to obtain a sign of the Local Oscillator Frequency Offset signal.

2. The method (100) of claim 1, further comprising: averaging the phase estimate, $\varphi_{est}$, for determining an average of the phase.

3. The method (100) of claim 1 or 2, wherein the adjusting (111) the sign comprises weighting the difference component, $|I|-|Q|$, with a sign representing a sign multiplication of the inphase sign, sgn(I), and the quadrature sign, sgn(Q).

4. The method (100) of one of the preceding claims, wherein the sign of the difference component, $|I|-|Q|$, is determined by a modulo-2 addition of the inphase sign, sgn(I), and the quadrature sign, sgn(Q).

5. The method (100) of one of the preceding claims, wherein the estimating the phase comprises only logic addition and real number addition operations.

6. The method (200) of one of claims 1 to 5, wherein the Local Oscillator Frequency Offset signal is obtained as a product of the absolute value of the Local Oscillator Frequency Offset signal, of the sign of the Local Oscillator Frequency Offset signal and of a frequency resolution, $\Delta f$, of the frequency transformation (203).

7. The method (200) of one of claims 1 to 6, wherein the transforming (203) comprises a Fast Fourier Transformation.

8. The method (200) of one of claims 1 to 7, wherein the differentiating (205) comprises:

delaying the phase estimate, $\varphi_{est}$, by a predetermined time delay, T, to obtain a delayed phase estimate, $\varphi_{est,T}$; and

determining a difference of the phase estimate, $\varphi_{est}$, and the delayed phase estimate, $\varphi_{est,T}$.

9. The method (200) of one of claims 1 to 8, comprising:

determining the frequency resolution, $\Delta f$, as a quotient of a baudrate of the digitally modulated complex-valued data signal and four times a size N of the transformation used for transforming the phase estimate into frequency domain.

10. The method (200) of one of claims 1 to 9, comprising:

storing the phase estimate in a memory having a size equal or greater than the size N of the transformation used for transforming (203) the phase estimate, $\varphi_{est}$, into frequency domain.

11. The method (200) of one of the claims 1 to 10, further comprising:

compensating a carrier frequency offset between the phase modulated signal, Z(k),
and a local oscillator signal by using the Local Oscillator Frequency Offset signal.

12. The method (200) of one of the preceding claims 1 to 11, wherein the phase modulated signal, Z(k), is a BPSK or a QPSK signal, in particular an optical BPSK or an optical QPSK signal.

13. A coherent receiver (300) for processing a received phase modulated signal, Z(k) having an inphase component, I, and a quadrature component, Q, the receiver comprising
a phase estimator (301) being configured to estimate a phase of the phase modulated signal, Z(k), by
determining (101) the inphase component, I, of the phase modulated signal, Z(k);
determining (103) the quadrature component, Q, of the phase modulated signal, Z(k);
determining (105) a difference of absolute values of the inphase component, I, and the quadrature component, Q, to obtain a difference component, $|I|-|Q|$;
determining (107) a sign of the inphase component, I, to obtain an inphase sign, sgn(I);

determining (109) a sign of the quadrature component, Q, to obtain a quadrature sign, sgn(Q);

adjusting (111) a sign of the difference component, |I|-|Q|, upon the basis of the inphase sign, sgn(I), and the quadrature sign, sgn(Q) to obtain the phase estimate, $\varphi_{est}$; and

an oscillator frequency estimator (303) being configured to estimate a Local Oscillator Frequency Offset signal, by transforming (203) the phase estimate, $\varphi_{est}$, into frequency domain to obtain a transformed phase estimate, $FFT(\varphi_{est})$;

differentiating (205) the phase estimate, $\varphi_{est}$, with respect to time to obtain a differential phase estimate, $d\varphi_{est}/dt$;

determining (207) an absolute value of the transformed phase estimate, $FFT(\varphi_{est})$, to obtain an absolute value of the Local Oscillator Frequency Offset signal;

determining (207) a maximum frequency value of the absolute value of the Local Oscillator Frequency Offset signal;

determining (209) an average of the differential phase estimate, $d\varphi_{est}/dt$, to obtain an averaged differential phase estimate, $\overline{d\varphi_{est}/dt}$; and

determining (211) a sign of the averaged differential phase estimate, $\overline{d\varphi_{est}/dt}$, to obtain a sign of the Local Oscillator Frequency Offset signal.

14. Computer program having a program code for performing one of the methods (100, 200) of one of the claims 1 to 12 when run on a computer.

**Patentansprüche**

1. Verfahren (200) zum Abschätzen eines Lokaloszillator-Frequenzversatzsignals (Local Oscillator Frequency Offset signal) für ein phasenmoduliertes Signal, Z(k), das eine Gleichtaktkomponente, I, und eine Quadraturkomponente, Q, aufweist, wobei das Verfahren umfasst:

Ermitteln (201) einer Phasenabschätzung, $\varphi_{est}$, des phasenmodulierten Signals, Z(k),
durch
Ermitteln (101) der Gleichtaktkomponente, I, des phasenmodulierten Signals, Z(k);
Ermitteln (103) der Quadraturkomponente, Q, des phasenmodulierten Signals, Z(k);
Ermitteln (105) einer Differenz der Absolutwerte der Gleichtaktkomponente, I, und der Quadraturkomponente, Q, um eine Differenzkomponente, |I| - |Q| zu erhalten;
Ermitteln (107) eines Vorzeichens der Gleichtaktkomponente, I, um ein Gleichtaktvorzeichen, sgn(I), zu erhalten;
Ermitteln (109) eines Vorzeichens der Quadraturkomponente, Q, um ein Quadraturvorzeichen, sgn(Q), zu erhalten; und
Anpassen (111) eines Vorzeichens der Differenzkomponente, |I| - |Q|, auf der Grundlage des Gleichtaktvorzeichens, sgn(I), und des Quadraturvorzeichens, sgn(Q),
um die Phasenabschätzung, $\varphi_{est}$, zu erhalten;
Transformieren (203) der Phasenabschätzung, $\varphi_{est}$, in den Frequenzbereich, um eine transformierte Phasenabschätzung, $FFT(\varphi_{est})$, zu erhalten;
Ableiten (205) der Phasenabschätzung, $\varphi_{est}$, nach der Zeit, um eine differenzierte Phasenabschätzung, $d\varphi_{est}/dt$, zu erhalten;
Ermitteln (207) eines Absolutwerts der transformierten Phasenabschätzung, $FFT(\varphi_{est})$, um einen Absolutwert des Lokaloszillator-Frequenzversatzsignals zu erhalten;
Ermitteln (207) eines maximalen Frequenzwerts des Absolutwerts des Lokaloszillator-Frequenzversatzsignals;
Ermitteln (209) eines Mittelwerts der differenzierten Phasenabschätzung, $d\varphi_{est}/dt$,
um eine gemittelte differenzierte Phasenabschätzung, $\overline{d\varphi_{est}/dt}$, zu erhalten; und
Ermitteln (211) eines Vorzeichens des Mittelwerts der differenzierten Phasenabschätzung, $\overline{d\varphi_{est}/dt}$, um ein Vorzeichen des Lokaloszillator-Frequenzversatzsignals zu erhalten.

2. Verfahren (100) nach Anspruch 1, das außerdem aufweist: Bilden eines Mittelwerts der Phasenabschätzung, $\varphi_{est}$, zum Ermitteln eines Mittelwerts der Phase.

3. Verfahren (100) nach Anspruch 1 oder 2, wobei das Anpassen (111) des Vorzeichens ein Gewichten der Differenzkomponente, |I| - |Q|, mit einem Vorzeichen umfasst, das eine Vorzeichenmultiplikation des Gleichtaktvorzeichens, sgn(I), und des Quadraturvorzeichens, sgn(Q), repräsentiert.

4. Verfahren (100) nach einem der vorhergehenden Ansprüche, wobei das Vorzeichen der Differenzkomponente, |I| - |Q|, ermittelt wird durch eine Modulo-2-Addition des Gleichtaktvorzeichens, sgn(I), und des Quadraturvorzeichens, sgn(Q).

5. Verfahren (100) nach einem der vorhergehenden Ansprüche, wobei das Abschätzen der Phase nur Operationen von logischen Additionen und von Additionen reeller Zahlen umfasst.

6. Verfahren (200) nach einem der Ansprüche 1 bis 5, wobei das Lokaloszillator-Frequenzversatzsignal erhalten wird als ein Produkt aus dem Absolutwert des Lokaloszillator-Frequenzversatzsignals, dem Vorzeichen des Lokaloszillator-Frequenzversatzsignals und einer Frequenzauflösung, $\Delta f$, der Frequenztransformation (203).

7. Verfahren (200) nach einem der Ansprüche 1 bis 6, wobei das Transformieren (203) eine schnelle Fourier-Transformation umfasst.

8. Verfahren (200) nach einem der Ansprüche 1 bis 7, wobei das Ableiten (205) umfasst:

Verzögern der Phasenabschätzung, $\varphi_{est}$, um eine vorbestimmte Zeitverzögerung, T, um eine verzögerte Phasenabschätzung, $\varphi_{est,\ T}$, zu erhalten; und Ermitteln einer Differenz der Phasenabschätzung, $\varphi_{est}$, und der verzögerten Phasenabschätzung, $\varphi_{est,\ T}$.

9. Verfahren (200) nach einem der Ansprüche 1 bis 8, das umfasst:

Ermitteln der Frequenzauflösung, $\Delta f$, als ein Quotient einer Baudrate des digital modulierten Datensignals aus komplexen Werten und dem vierfachen Wert einer Größe N der Transformation, die verwendet wurde um die Phasenabschätzung in den Frequenzbereich zu transformieren.

10. Verfahren (200) nach einem der Ansprüche 1 bis 9, das umfasst:

Speichern der Phasenabschätzung in einem Speicher, der eine Größe gleich oder größer als die Größe N der Transformation aufweist, die verwendet wurde um die Phasenabschätzung, $\varphi_{est}$, in den Frequenzbereich zu transformieren (203).

11. Verfahren (200) nach einem der Ansprüche 1 bis 10, das außerdem umfasst:

Ausgleichen eines Trägerfrequenzversatzes zwischen dem phasenmodulierten Signal, Z(k), und einem Lokaloszillatorsignal, indem das Lokaloszillator-Frequenzversatzsignal verwendet wird.

12. Verfahren (200) nach einem der vorangehenden Ansprüche 1 bis 11, wobei das phasenmodulierte Signal, Z(k), ein BPSK- oder ein QPSK-Signal, insbesondere ein optisches BPSK- oder ein optisches QPSK-Signal ist.

13. Kohärenter Empfänger (300) zum Verarbeiten eines empfangenen phasenmodulierten Signals, Z(k), das eine Gleichtaktkomponente, I, und eine Quadraturkomponente, Q, aufweist, wobei der Empfänger umfasst eine Phasenabschätzeinheit (301), die konfiguriert ist, eine Phase eines phasenmodulierten Signals, Z(k), abzuschätzen, durch
Ermitteln (101) der Gleichtaktkomponente, I, des phasenmodulierten Signals, Z(k); Ermitteln (103) der Quadraturkomponente, Q, des phasenmodulierten Signals, Z(k); Ermitteln (105) einer Differenz der Absolutwerte der Gleichtaktkomponente, I, und der Quadraturkomponente, Q, um eine Differenzkomponente, |I| - |Q|, zu erhalten; Ermitteln (107) eines Vorzeichens der Gleichtaktkomponente, I, um ein Gleichtaktvorzeichen, sgn(I), zu erhalten;
Ermitteln (109) eines Vorzeichens der Quadraturkomponente, Q, um ein Quadraturvorzeichen, sgn(Q), zu erhalten; Anpassen (111) eines Vorzeichens der Differenzkomponente, |I| - |Q|, auf der Grundlage des Gleichtaktvorzeichens, sgn(I), und des Quadraturvorzeichens, sgn(Q), um die Phasenabschätzung, $\varphi_{est}$, zu erhalten; und
eine Abschätzeinheit für eine Oszillatorfrequenz (303), die konfiguriert ist, ein Lokaloszillator-Frequenzversatzsignal abzuschätzen, durch
Transformieren (203) der Phasenabschätzung, $\varphi_{est}$, in den Frequenzbereich, um eine transformierte Phasenabschätzung, FFT($\varphi_{est}$), zu erhalten;
Ableiten (205) der Phasenabschätzung, $\varphi_{est}$, nach der Zeit, um eine differenzierte Phasenabschätzung, $d\varphi_{est}\ /\ dt$, zu erhalten;
Ermitteln (207) eines Absolutwerts der transformierten Phasenabschätzung, FFT($\varphi_{est}$), um einen Absolutwert des Lokaloszillator-Frequenzversatzsignals zu erhalten;
Ermitteln (207) eines maximalen Frequenzwerts des Absolutwerts des Lokaloszillator-Frequenzversatzsignals;
Ermitteln (209) eines Mittelwerts der differenzierten Phasenabschätzung, $d\varphi_{est}/dt$, um eine gemittelte differenzierte Phasenabschätzung, $\overline{d\varphi_{est}/dt}$, zu erhalten; und Ermitteln (211) eines Vorzeichens des Mittelwerts der differenzierten Phasenabschätzung, $\overline{d\varphi_{est}/dt}$, um ein Vorzeichen des Lokaloszillator-Frequenzversatzsignals zu erhalten.

**14.** Computerprogramm, das einen Programmcode für das Ausführen eines der Verfahren (100, 200) nach einem der Ansprüche 1 bis 12 aufweist, wenn dieser auf einem Computer ausgeführt wird.

## Revendications

**1.** Procédé (200) d'estimation d'un signal de décalage en fréquence d'un oscillateur local pour un signal modulé en phase, Z (k), comportant une composante en phase, I, et une composante en quadrature, Q, le procédé comprenant :

la détermination (201) d'une estimation de phase, $\varphi_{est}$, du signal modulé en phase, Z (k), grâce à :

la détermination (101) de la composante en phase, I, du signal modulé en phase, Z (k),
la détermination (103) de la composante en quadrature, Q, du signal modulé en phase, Z (k),
la détermination (105) d'une différence de valeurs absolues de la composante en phase, I, et de la composante en quadrature, Q, afin d'obtenir une composante de différence, III - IQI,
la détermination (107) d'un signe de la composante en phase, I, afin d'obtenir un signe en phase, sgn (I),
la détermination (109) d'un signe de la composante en quadrature, Q, afin d'obtenir un signe en quadrature, sgn (Q), et
l'ajustement (111) d'un signe de la composante de différence, III - IQI, sur la base du signe en phase, sgn (I) et du signe en quadrature, sgn (Q), afin
d'obtenir l'estimation de phase $\varphi_{est}$,

la transformation (203) de l'estimation de phase, $\varphi_{est}$, en domaine de fréquence afin d'obtenir une estimation de phase transformée, FFT ($\varphi_{est}$),
la différenciation (205) de l'estimation de phase, $\varphi_{est}$, par rapport au temps afin d'obtenir une estimation de phase différentielle, $d\varphi_{est}/dt$,
la détermination (207) d'une valeur absolue de l'estimation de phase transformée, FFT($\varphi_{est}$), afin d'obtenir une valeur absolue du signal de décalage en fréquence de l'oscillateur local,
la détermination (207) d'une valeur de fréquence maximale de la valeur absolue du signal de décalage en fréquence de l'oscillateur local,
la détermination (209) d'une moyenne de l'estimation de phase différentielle, $d\varphi_{est}/dt$, afin d'obtenir une estimation de phase différentielle moyennée, $\overline{d\varphi_{est}/dt}$, et
la détermination (211) d'un signe de l'estimation de phase différentielle moyennée, $\overline{d\varphi_{est}/dt}$, afin d'obtenir un signe du signal de décalage en fréquence de l'oscillateur local.

**2.** Procédé (100) selon la revendication 1, comprenant en outre l'établissement d'une moyenne de l'estimation de phase, $\varphi_{est}$, afin de déterminer une moyenne de la phase.

**3.** Procédé (100) selon la revendication 1 ou 2, dans lequel l'ajustement (111) du signe comprend la pondération de la composante de différence, III - IQI avec un signe représentant la multiplication des signes que sont le signe en phase, sgn(I), et le signe en quadrature, sgn(Q).

**4.** Procédé (100) selon l'une des revendications précédentes, dans lequel le signe de la composante de différence, III - IQI, est déterminé par une addition modulo 2 du signe en phase, sgn(I), et du signe en quadrature, sgn(Q).

**5.** Procédé (100) selon l'une des revendications précédentes, dans lequel l'estimation de la phase ne comprend que des opérations d'addition logique et d'addition de nombres réels.

**6.** Procédé (200) selon l'une des revendications 1 à 5, dans lequel le signal de décalage en fréquence de l'oscillateur local est obtenu comme le produit de la valeur absolue du signal de décalage en fréquence de l'oscillateur local, du signe du signal de décalage en fréquence de l'oscillateur local et d'une résolution en fréquence, $\Delta f$, de la trans-

formation en fréquence (203).

7. Procédé (200) selon l'une des revendications 1 à 6, dans lequel la transformation (203) comprend une transformation rapide de Fourier.

8. Procédé (200) selon l'une des revendications 1 à 7, dans lequel la différenciation (205) comprend :

retarder l'estimation de phase, $\varphi_{est}$, d'un retard prédéterminé de temps, T, afin d'obtenir une estimation de phase retardée, $\varphi_{est, T}$, et
la détermination d'une différence de l'estimation de phase, $\varphi_{est}$, et de l'estimation de phase retardée $\varphi_{est, T}$.

9. Procédé (200) selon l'une des revendications 1 à 8, comprenant :

la détermination de la résolution en fréquence,$\Delta f$, comme étant un quotient d'un débit en bauds du signal de données exprimé en valeur complexe modulé numériquement et de quatre fois une taille N de la transformation utilisée pour transformer l'estimation de phase en domaine de fréquence.

10. Procédé (200) selon l'une des revendications 1 à 9, comprenant :

la mémorisation de l'estimation de phase dans une mémoire possédant une taille supérieure ou égale à la taille N de la transformation utilisée pour transformer (203) l'estimation de phase, $\varphi_{est}$, en domaine de fréquence.

11. Procédé (200) selon l'une des revendications 1 à 10, comprenant en outre :

la compensation d'un décalage en fréquence de porteuse entre le signal modulé en phase, Z (k), et un signal d'oscillateur local grâce à l'utilisation du signal de décalage en fréquence de l'oscillateur local.

12. Procédé (200) selon l'une des revendications 1 à 11 précédentes, dans lequel le signal modulé en phase, Z(k), est un signal modulé par inversion de phase (BPSK) ou modulé par quadrature de phase (QPSK), en particulier un signal optique de type BPSK ou optique de type QPSK.

13. Récepteur cohérent (300) permettant de traiter un signal modulé en phase, Z (k), reçu, comportant une composante en phase, I, et une composante en quadrature, Q, le récepteur comprenant :

un dispositif d'estimation de phase (301) configuré pour estimer une phase du signal modulé en phase, Z (k), grâce à
la détermination (101) de la composante en phase, I, du signal modulé en phase, Z (k),
la détermination (103) de la composante en quadrature, Q, du signal modulé en phase, Z (k),
la détermination (105) d'une différence de valeurs absolues de la composante en phase, I, et de la composante en quadrature, Q, afin d'obtenir une composante de différence, III - IQI,
la détermination (107) d'un signe de la composante en phase, I, afin d'obtenir un signe en phase, sgn (I),
la détermination (109) d'un signe de la composante en quadrature, Q, afin d'obtenir un signe en quadrature, sgn (Q), et
l'ajustement (111) d'un signe de la composante de différence, III - IQI, sur la base du signal en phase, sgn (I) et du signe en quadrature, sgn (Q), afin d'obtenir l'estimation de phase $\varphi_{est}$, et
un dispositif d'estimation de la fréquence d'oscillateur (303) configuré pour estimer un signal de décalage en fréquence de l'oscillateur local, grâce à
la transformation (203) de l'estimation de phase, $\varphi_{est}$, en domaine de fréquence afin d'obtenir une estimation de phase transformée, FFT ($\varphi_{est}$),
la différenciation (205) de l'estimation de phase, $\varphi_{est}$, par rapport au temps afin d'obtenir une estimation de phase différentielle, d($\varphi_{est}$ / dt,
la détermination (207) d'une valeur absolue de l'estimation de phase transformée, FFT($\varphi_{est}$), afin d'obtenir une valeur absolue du signal de décalage en fréquence de l'oscillateur local,
la détermination (207) d'une valeur de fréquence maximale de la valeur absolue du signal de décalage en fréquence de l'oscillateur local,
la détermination (209) d'une moyenne de l'estimation de phase différentielle, d($\varphi_{est}$ / dt, afin d'obtenir une estimation de phase différentielle moyennée, $\overline{d\varphi_{est} / dt}$, et

la détermination (211) d'un signe de l'estimation de phase différentielle moyennée, $\overline{d\varphi_{est} / dt}$, afin d'obtenir un signe du signal de décalage en fréquence de l'oscillateur local.

14. Programme informatique comportant un code de programmes permettant d'effectuer l'un des procédés (100, 200) selon l'une des revendications 1 à 12 lorsqu'il est exécuté sur un ordinateur.

Fig. 1

Fig. 2

Phase Estimator — 301

LOFO estimator — 303

300

**Fig. 3**

**Fig. 4**

Fig. 5

**Fig. 6**

Fig. 7

**Fig. 8**

**Fig. 9**

**Fig. 10**

**Fig. 11**

Fig. 12

**Fig. 13**

1404

1405

**Performance 40G 1P-QPSK after TD FIR (CMA)**

differential

1401

phase reference

phase reference

Abs(FFT{phase ref})

1407

No noise
LOFO -500MHz

N=128

Estim.:
-522 MHz

1402

No noise
LOFO 500MHz

N=128

1408

Estim.:
522 MHz

1409

11dB OSNR
LOFO 500MHz

N=128

Estim.:
566 MHz

1403

1406

**Fig. 14**

Fig. 15

1601

1602

1P-sDQPSK w/ improved NEC(22.3G baudrate, offline data)

**Fig. 16**

**Fig. 17**

1702

1704   1701   1705

1703

22.3G 1pol-DQPSK with 500MHz LOFO w/o LOFO compensation

1701
1702

* — SD
* — MSPE
* — NEC
INEC
— HD

HD w/ CPE w/o LOFO
for reference

1703
1704
1705

OSNR(dB)

BER

**EP 2 583 424 B1**

REFERENCES CITED IN THE DESCRIPTION

**Patent documents cited in the description**

- EP 0703688 A1
- US 20110116562 A1